# EUROPÄISCHE PATENTSCHRIFT

(11) **EP 4 366 854 B1**
(45) Veröffentlichungstag und Bekanntmachung des Hinweises auf die Patenterteilung: **26.02.2025**
(21) Anmeldenummer: 22733599.9
(22) Anmeldetag: 13.06.2022
(51) Int. Cl.: B01D 46/00, B01D 46/24

(54) **ABSCHEIDEVORRICHTUNG MIT EINEM ABSCHEIDEELEMENT**
SEPARATING DEVICE WITH A SEPARATING ELEMENT
DISPOSITIF DE SÉPARATION DOTÉ D'UN ÉLÉMENT DE SÉPARATION

(30) Priorität: 05.07.2021 DE 102021117297
(43) Veröffentlichungstag der Anmeldung: 15.05.2024
(73) Patentinhaber: MANN+HUMMEL GmbH, 71636 Ludwigsburg (DE)
(72) Erfinder: DWORATZEK, Klemens, 68535 Edingen (DE); JOLIN, Pierre, 59350 Saint André (FR)
(74) Vertreter: Mann + Hummel Intellectual Property
(86) Internationale Anmeldenummer: PCT/EP2022/065960
(87) Internationale Veröffentlichungsnummer: WO 2023/280517

(56) Entgegenhaltungen:
- EP-A1- 0 880 987
- DE-A1- 102015 007 899
- DE-A1- 102016 000 857
- DE-A1- 102016 009 487
- DE-A1- 102017 011 874
- US-A1- 2021 170 314

## Beschreibung

### Technisches Gebiet

Die Erfindung betrifft eine Abscheidevorrichtung zur Abtrennung wenigstens eines flüssigen Fluids aus Gas, insbesondere von aus flüssigem Fluid gebildetem Aerosol, wobei das flüssige Fluid beispielsweise Öl, Kraftstoff, Hydraulikflüssigkeit oder Kühlmittel sein kann, aus Gas, insbesondere aus Luft, einer Anschlusseinrichtung, insbesondere eines Kompressors, einer Druckluftanlage oder einer Vakuumpumpe. Die Erfindung betrifft ferner ein Abscheideelement für eine Abscheidevorrichtung.

### Stand der Technik

Die DE 10 2017 011 874 A1 offenbart eine Abscheidevorrichtung, welche zur Abscheidung wenigstens einer Flüssigkeit aus Gas dient, welche aus einer Anschlusseinrichtung zugeführt wird. Sowohl das gereinigte Gas und die abgeschiedene Flüssigkeit werden durch die Anschlusseinrichtung auch wieder abgeführt. Die Abscheidevorrichtung weist mindestens einen zum Abführen der abgeschiedenen Flüssigkeit aus der Abscheidevorrichtung ausgebildeten Fluidablaufkanal, mindestens ein zur Verbindung eines Abscheideelements der Abscheidevorrichtung mit der Anschlusseinrichtung ausgebildetes Verbindungselement, welches auch regelmäßig als Anschlussnippel bezeichnet wird und in der Regel einmal montiert an der Anschlusseinrichtung verbleibt, sowie ein Abscheideelement auf mit einem Gehäuse und mindestens einem darin angeordnetem Koaleszenzfilterelement und einem zum Verschließen einer Stirnseite des Gehäuses ausgebildeten Gehäusedeckel mit mindestens einem ersten Gasdurchlass, der in Bezug zu einer Montageachse des Abscheideelements an der Anschlusseinrichtung zentral, insbesondere koaxial, angeordnet ist, sowie einem zweiten Gasdurchlass, der in Bezug zur Montageachse des Abscheideelements radial außerhalb des ersten Gasdurchlasses angeordnet ist.

Das Befestigungsgewinde der Abscheidevorrichtung ist dicht oder fluidundurchlässig, Der Flüssigkeitsablauf erfolgt innerhalb des Verbindungselements, beispielsweise durch mindestens einen innerhalb des Verbindungselements angeordneten ringförmigen Ablaufkanal. Um einen Flüssigkeitsablauf durch den Gehäusedeckel zu verhindern, ist der Gehäusedeckel zwischen dem Gewinde des Gehäusedeckels und dem zweiten Gasdurchlass des Gehäusedeckels vollständig geschlossen oder vollständig dicht.

### Offenbarung der Erfindung

Eine Aufgabe der Erfindung ist es, eine Abscheidevorrichtung zur Abtrennung wenigstens eines flüssigen Fluids aus Gas bereitzustellen, welche ein günstiges Ableiten des abgetrennten flüssigen Fluids ermöglicht.

Eine weitere Aufgabe ist es, ein Abscheideelement für eine solche Abscheidevorrichtung bereitzustellen, welches eine günstige Montage in der Abscheidevorrichtung ermöglicht.

Die vorgenannte Aufgabe wird nach einem Aspekt der Erfindung gelöst von einer Abscheidevorrichtung zur Abtrennung wenigstens eines flüssigen Fluids aus Gas, umfassend mindestens ein Abscheideelement mit Gehäuse mit Gehäusedeckel und einem darin angeordneten Filterelement, wobei der Gehäusedeckel ein Gehäusedeckelgewinde aufweist, das zum Aufschrauben auf ein Verbindungselementgewinde ausgebildet ist, mindestens einen ersten Gasdurchlass, der in Bezug zu einer Montageachse des Abscheideelements an einer Anschlusseinrichtung zentral, insbesondere koaxial, angeordnet ist und dem das Gehäusedeckelgewinde zugeordnet ist, mindestens einen zweiten Gasdurchlass, der in Bezug zur Montageachse des Abscheideelements radial außerhalb des ersten Gasdurchlasses angeordnet ist, mindestens ein zur Verbindung des Abscheideelements der Abscheidevorrichtung mit der Anschlusseinrichtung ausgebildetes Verbindungselement, das ein Verbindungselementgewinde sowie ein Leitungselement aufweist, wobei an das Verbindungselementgewinde ein Umfangselement anschließt, das sich in axialer Richtung in einen Innenraum des Abscheideelements erstreckt, wobei das Verbindungselementgewinde sowie das Umfangselement das Leitungselement umgeben und wobei zwischen Leitungselement und Umfangselement wenigstens ein in einer axialen Richtung verlaufender Fluidkanal ausgebildet ist. Das Abscheideelement weist wenigstens ein Konturelement und das Verbindungselement wenigstens ein dazu komplementäres Gegenkonturelement auf, welche bei bestimmungsgemäßem Verschrauben des Abscheideelements mit dem Verbindungselement zum verwechslungssicheren Zusammenwirken ausgebildet sind, insbesondere zum ineinander Eingreifen ausgestaltet sind, wobei das Umfangselement das Gegenkonturelement aufweist, mit einem oder mehreren Durchbrüchen, welche das Umfangselement in radialer Richtung von seiner Außenseite bis zu dem Fluidkanal durchdringen.

Die weitere Aufgabe wird nach einem weiteren Aspekt der Erfindung gelöst von einem Abscheideelement für eine Abscheidevorrichtung mit einem Gehäuse und mindestens einem darin angeordnetem Filterelement und mit einem zum Verschließen einer Stirnseite des Gehäuses ausgebildeten Gehäusedeckel mit mindestens einem ersten Gasdurchlass, der in Bezug zu einer bestimmungsgemäßen Montageachse des Abscheideelements an einer Anschlusseinrichtung zentral, insbesondere koaxial, angeordnet ist, einem dem ersten Gasdurchlass zugeordneten Gehäusedeckelgewinde, welches bei bestimmungsgemäßer Montage zum Aufschrauben auf ein Verbindungselementgewinde eines Verbindungselements der Abscheidevorrichtung ausgebildet ist und mindestens einem zweiten Gasdurchlass, der in Bezug zur bestimmungsgemäßen Montageachse des Abscheideelements radial außerhalb des ersten Gasdurchlasses angeordnet ist, wobei das Filterelement eine sich in Bezug zur bestimmungsgemäßen Montageachse des Abscheideelements radial erstreckende und dem Gehäusedeckel zugewandte Stirnseite aufweist, welche durch eine erste Endscheibe begrenzt ist, wobei die Endscheibe eine zum Durchführen des Verbindungselements ausgebildete und dem ersten Gasdurchlass zugeordnete Durchstrecköffnung aufweist, wobei das Abscheideelement wenigstens ein Konturelement aufweist, welches bei bestimmungsgemäßem Verschrauben des Abscheideelements mit dem Verbindungselement zur Aufnahme eines an dem Verbindungselement der Abscheidevorrichtung angeordneten Gegenkonturelements ausgebildet ist und das Konturelement wenigstens eine Kontur aufweist, die verwechslungssicher mit dem Gegenkonturelement zusammensetzbar ist, wobei die Kontur in Form von Aussparungen, Einschnitten und/oder Löchern ausgebildet ist.

Ein Innendurchmesser der Durchstrecköffnung ist größer als ein Außendurchmesser des Verbindungselements an der Stelle. Zwischen einer radial äußeren Umfangswand des Verbindungselements und einem radial inneren Randbereich der Durchstrecköffnung verbleibt ein ringförmiger, koaxialer Spalt durch den das abgeschiedene flüssige Fluid in den Fluidkanal gelangt.

Günstige Ausgestaltungen und Vorteile der Erfindung ergeben sich aus den weiteren Ansprüchen, der Beschreibung und der Zeichnung.

Es wird nach einem Aspekt der Erfindung eine Abscheidevorrichtung zur Abtrennung wenigstens eines flüssigen Fluids aus Gas vorgeschlagen, umfassend mindestens ein Abscheideelement mit Gehäuse mit Gehäusedeckel und einem darin angeordneten Filterelement, wobei der Gehäusedeckel ein Gehäusedeckelgewinde aufweist, das zum Aufschrauben auf ein Verbindungselementgewinde ausgebildet ist, mindestens einen ersten Gasdurchlass, der in Bezug zu einer Montageachse des Abscheideelements an einer Anschlusseinrichtung zentral, insbesondere koaxial, angeordnet ist und dem das Gehäusedeckelgewinde zugeordnet ist, mindestens einen zweiten Gasdurchlass, der in Bezug zur Montageachse des Abscheideelements radial außerhalb des ersten Gasdurchlasses angeordnet ist, mindestens ein zur Verbindung des Abscheideelements der Abscheidevorrichtung mit der Anschlusseinrichtung ausgebildetes Verbindungselement, das ein Verbindungselementgewinde sowie ein Leitungselement aufweist, wobei an das Verbindungselementgewinde ein Umfangselement anschließt, das sich in axialer Richtung in einen Innenraum des Abscheideelements erstreckt, wobei das Verbindungselementgewinde sowie das Umfangselement das Leitungselement umgeben und wobei zwischen Leitungselement und Umfangselement wenigstens ein in einer axialen Richtung verlaufender Fluidkanal ausgebildet ist.

Das Abscheideelement weist wenigstens ein Konturelement und das Verbindungselement wenigstens ein dazu komplementäres Gegenkonturelement auf, welche bei bestimmungsgemäßem Verschrauben des Abscheideelements mit dem Verbindungselement zum verwechslungssicheren Zusammenwirken ausgebildet sind.

Die Abscheidevorrichtung dient zur Abtrennung wenigstens eines flüssigen Fluids aus Gas, insbesondere von aus flüssigen Fluid gebildetem Aerosol, wobei das flüssige Fluid beispielsweise Öl, Kraftstoff, Hydraulikflüssigkeit oder Kühlmittel sein kann, aus Gas, insbesondere aus Luft. Das Gas wird aus einer Anschlusseinrichtung, insbesondere eines Kompressors, einer Druckluftanlage oder einer Vakuumpumpe zugeführt. Sowohl das gereinigte Gas und das abgeschiedene flüssige Fluid werden durch die Anschlusseinrichtung auch wieder abgeführt.

Die Abscheidevorrichtung weist mindestens einen zum Abführen der abgeschiedenen Flüssigkeit aus der Abscheidevorrichtung ausgebildeten Fluidkanal, mindestens ein zur Verbindung eines Abscheideelements der Abscheidevorrichtung mit der Anschlusseinrichtung ausgebildetes Verbindungselement, ein Abscheideelement mit einem Gehäuse und mindestens einem darin angeordnetem Filterelement und einem zum Verschließen einer Stirnseite des Gehäuses ausgebildeten Gehäusedeckel auf.

Der Gehäusedeckel weist mindestens einen ersten Gasdurchlass, der in Bezug zu einer Montageachse des Abscheideelements an der Anschlusseinrichtung zentral, insbesondere koaxial, angeordnet ist, ein dem ersten Gasdurchlass zugeordnetes Gewinde, wobei dieses Gehäusedeckelgewinde zum Aufschrauben auf ein Gewinde des Verbindungselements ausgebildet ist, und mindestens einen zweiten Gasdurchlass auf, der in Bezug zur Montageachse des Abscheideelements radial außerhalb des ersten Gasdurchlasses angeordnet ist.

Vorteilhaft erlaubt die Erfindung, bei Verwendung gleicher Anschlussgewinde gezielt ein Aufschrauben zu ermöglichen oder zu verhindern. So kann gezielt die Kompatibilität bzw. Inkompatibilität von Komponenten zur Verfügung gestellt werden.

In dem Filterelement können beispielsweise mehrere aufeinander liegend gewickelte Lagen eines Koaleszenzfiltermediums, beispielsweise eines Glasfaserpapiers, angeordnet sein, in welchen kleine Flüssigkeitströpfchen zu größeren Tropfen vereint und durch Schwerkraft nach unten in Richtung des Flüssigkeitsauslasses drainiert werden.

Der Transport des abgeschiedenen flüssigen Fluids kann optional auch über einen entsprechenden Differenzdruck erfolgen. Dies ist z. B. bei "hängender Anordnung" des Abscheiders günstig. Hierbei kann der Transport des abgeschiedenen flüssigen Fluids mit Hilfe eines zusätzlichen Röhrchens erfolgen.

Das Verbindungselement ist üblicherweise mit der Anschlusseinrichtung, welche beispielsweise an einem Kompressor angeordnet ist, fest verbunden, beispielsweise über eine Verschraubung und/oder Verklebung. Das Abscheideelement wird zum bestimmungsgemäßen Gebrauch auf das Verbindungselement aufgeschraubt und dadurch mit der Anschlusseinrichtung gasdicht und flüssigkeitsdicht verbunden. Solche Abscheideelemente sind deshalb üblicherweise als "Spin-On-Separatoren" bekannt.

Das aus dem Gehäusedeckelgewinde und dem Verbindungselementgewinde gebildete Befestigungsgewinde der Abscheidevorrichtung ist dazu dicht oder fluidundurchlässig, insbesondere im Wesentlichen flüssigkeitsundurchlässig ausgebildet. Das Verbindungselementgewinde und das Gehäusedeckelgewinde sind hierzu bevorzugt ununterbrochen, d. h. die Gewinde weisen mehrere vollständige und ununterbrochene Gewindegänge auf. Weil das Gewinde des Gehäusedeckels insbesondere auf diese Weise zum Dichten oder zum dichtenden Eingriff in das Gewinde des Verbindungselements ausgebildet ist, also dicht mit dem Gewinde des Verbindungselements verbindbar ist, ist bei der vorliegenden Erfindung der Gehäusedeckel ohne zusätzliches Dichtelement dicht mit dem Verbindungselement verbindbar. Ein Flüssigkeitsablauf durch das Befestigungsgewinde der Abscheidevorrichtung wird zuverlässig verhindert.

Somit muss die abgeschiedene Flüssigkeit radial innerhalb des Befestigungsgewindes der Abscheidevorrichtung, nämlich innerhalb des im ersten Gasdurchlass angeordneten Verbindungselements, ablaufen. Bei dem Abscheideelement der vorliegenden Erfindung ist also der Fluidablaufkanal in Bezug zur Montageachse des Abscheideelements radial innerhalb des Gehäusedeckelgewindes bzw. radial innerhalb des Verbindungselementgewindes angeordnet. Somit erfolgt der Flüssigkeitsablauf innerhalb des Verbindungselements, beispielsweise durch mindestens einen innerhalb des Verbindungselements angeordneten ringförmigen Fluidkanal.

Der Fluidkanal verläuft zwischen Leitungselement und Umfangselement in einer axialen Richtung. Je nach Länge des das Leitungselement umgebende Umfangselement kann es nötig sein, dass der Fluidstand in dem Filterelement erst eine gewisse Höhe überschreiten muss, bis das flüssige Fluid über den Fluidkanal ablaufen kann.

Die erfindungsgemäße Abscheidevorrichtung weist ein Verbindungselement auf, bei dem das Umfangselement einen oder mehrere Durchbrüche aufweist, welche das Umfangselement in radialer Richtung von seiner Außenseite bis zu dem Fluidkanal durchdringen. Diese Durchbrüche, welche beispielsweise als Bohrungen von einer Außenseite des Umfangselements radial nach innen bis zum Fluidkanal ausgebildet sein können, ermöglichen, dass das flüssige Fluid bereits bei einem geringeren Fluidstand in den Fluidkanal gelangen und ablaufen kann. Gerade bei relativ lang ausgebildetem Umfangselement kann das abgetrennte flüssige Fluid so bereits bei niedrigem Fluidstand günstig abfließen.

Gemäß einer erfindungsgemäßen Ausgestaltung der Abscheidevorrichtung weist das Umfangselement das Gegenkonturelement auf mit einem oder mehreren Durchbrüchen, welche das Umfangselement in radialer Richtung von seiner Außenseite bis zu dem Fluidkanal durchdringen.

Aufgrund der hohen Wirtschaftlichkeit, Servicefreundlichkeit und einfacher Integration kommen vermehrt mit Spin-On-Separatoren ausgestattete Abscheidevorrichtungen zum Einsatz. Hierdurch wächst der Bedarf zur Unterscheidung einzelner Produkte beispielsweise mit unterschiedlichen Abscheideeigenschaften ansonsten praktisch baugleicher Produkte. Benötigt wird hier ein sicheres Verhindern der Montage von Abscheideelementen auf Verbindungselementen von Abscheidevorrichtungen. Zusätzlich sollen aber auch Produkte unterschiedlicher Leistung, Wechselintervalle oder dergleichen geplant kompatibel oder eben nicht kompatibel sein. Zur Unterscheidung gab es bislang lediglich die Möglichkeit, die Gewinde zu variieren, wodurch die Aufgabe aber nur sehr begrenzt erfüllbar ist. Es kann gezielt bei Verwendung gleicher Anschlussgewinde ein Aufschrauben ermöglicht oder verhindert werden.

Durch die Anordnung eines Konturelements an dem Abscheideelement, welches beim Montieren des Abscheideelements auf dem Verbindungselement mit einem am Verbindungselement angeordneten Gegenkonturelement nach einem "Schlüssel-Schloss"-Prinzip zusammenwirkt, kann bewirkt werden, dass nur ein Abscheideelement an das Verbindungselement montiert werden kann, das dafür vorgesehen ist. So kann gewährleistet werden, dass nur freigegebene Kombinationen von Abscheideelement und Verbindungselement zum Einsatz kommen.

Insgesamt ermöglicht die Abscheidevorrichtung auf diese Weise die vom Markt geforderte Kompatibilität nach Wunsch, um die Austauschbarkeit einzelner Produkte, beispielsweise mit unterschiedlichen Abscheideeigenschaften, zu ermöglichen bzw. zu verhindern.

Gemäß einer günstigen Ausgestaltung der Abscheidevorrichtung kann das Konturelement als radial innerer, insbesondere kreisförmiger Randbereich einer Durchstrecköffnung in einer ersten Endscheibe des Filterelements ausgebildet sein und das Umfangselement das Gegenkonturelement aufweisen, wobei das Gegenkonturelement bei bestimmungsgemäßer Montage des Abscheideelements auf das Verbindungselement durch das Konturelement durchgreift, und wobei insbesondere ein Außendurchmesser des Gegenkonturelements kleiner als ein Innendurchmesser des Konturelements ist.

Das Umfangselement kann beispielsweise zum Innenraum des Abscheideelements verlängert sein. Bevorzugt wird hier der Durchmesser des Gewindegrundes verwendet und mit zusätzlichen Durchbrüchen als Verbindung zu Fluidkanälen versehen. Diese Verlängerung kann maßlich so abgestimmt sein, dass diese beim Aufsetzen des Abscheideelements auf das Verbindungselement einer nicht dafür vorgesehenen Abscheidevorrichtung auf den Randbereich des Abscheideelements trifft und somit ein Aufschrauben verhindert wird. Nur maßlich abgestimmte Abscheideelemente, deren Randbereich den geeigneten Öffnungsbereich vorsieht, lassen sich somit montieren.

Gemäß einer günstigen Ausgestaltung der Abscheidevorrichtung kann das Konturelement wenigstens eine Kontur, insbesondere Aussparungen und/oder Einschnitte und/oder Löcher, aufweisen, welche bei bestimmungsgemäßer Montage mit wenigstens einer an dem Gegenkonturelement angeordneten Gegenkontur zusammenwirken, insbesondere ineinander eingreifen. Dabei taucht eine Gegenkontur in die entsprechenden Aussparungen und/oder Einschnitte und/oder Löcher ein und ermöglicht somit ein Aufschrauben des Abscheideelements bei gleichzeitigem Ineinandergreifen von Kontur und Gegenkontur.

Eine zusätzliche Gegenkontur im Bereich des Verbindungselementgewindes im Innenraum von Abscheideelementen bewirkt in Kombination mit einer passend ausgeformten Kontur des Abscheideelements eine Art "Schlüssel-Schloss"-System. Zur Erzeugung zusätzlicher Varianten von Konturelement und Gegenkonturelement kann die Verlängerung des Umfangselements zusätzlich mit einer Gegenkontur versehen werden, die zu Aussparungen und Löchern der Kontur an dem Abscheideelement in einer Art gegenseitiger Verrastung passen. Diese Kontur taucht in die entsprechenden Aussparungen, Einschnitte oder Löcher ein und ermöglicht somit ein Aufschrauben des Abscheideelements.

Gemäß einer günstigen Ausgestaltung der Abscheidevorrichtung können die Durchbrüche in Umfangsrichtung des Verbindungselements innerhalb der Gegenkontur angeordnet sein. Diese Durchbrüche, welche beispielsweise als Nuten von einer Außenseite des Umfangselements radial nach innen bis zum Fluidkanal ausgebildet sein können, ermöglichen, dass das flüssige Fluid bereits bei einem geringeren Fluidstand in den Fluidkanal gelangen und ablaufen können. Gerade bei relativ lang ausgebildetem Umfangselement kann das abgetrennte flüssige Fluid so bereits bei niedrigem Fluidstand günstig abfließen.

Gemäß einer günstigen Ausgestaltung der Abscheidevorrichtung kann wenigstens eines von Konturelement und Gegenkonturelement um die Montageachse drehbar gelagert sein. Da das Abscheideelement mit einem Gewinde auf das Verbindungselement aufgeschraubt wird, ist eine drehbare Lagerung wenigstens eines der beiden zusätzlichen Bauteile erforderlich, wenn das Konturelement und das Gegenkonturelement bei der Montage des Abscheideelements auf das Verbindungselement in einer Art gegenseitiger Verrastung ineinandergreifen.

Gemäß einer günstigen Ausgestaltung der Abscheidevorrichtung kann mindestens ein Dichtungs- und Dämpfungselement zur Abdichtung einer Reinseite des Abscheideelements von einer ungereinigtes Gas aufweisenden Rohseite des Gehäuses und zum Abdämpfen in Bezug zur Montageachse des Abscheideelements axial gerichteter Schwingungen des Filterelements zwischen dem Filterelement und einer an der dem Innenraum des Gehäuses zugewandten Innenseite des Gehäusedeckels ausgebildeten Dichtfläche dichtend verpresst sein.

Anstatt die Abdichtung beispielsweise mittels einer O-Ring-Dichtung zwischen Abscheideelement und dem Verbindungselement vorzusehen, erfolgt die Abdichtung zwischen einer Rohseite und einer Reinseite der erfindungsgemäßen Abscheidevorrichtung über eine Dichtung zwischen einer Endscheibe des Filterelements und dem Gehäusedeckel. Der freiwerdende Bauraum im Randbereich der Endscheibe des Filterelements des Abscheideelements durch Weglassen der O-Ring-Dichtung kann der Aufnahme eines zusätzlichen Bauteils dienen, welches die Funktion des Konturelements übernimmt. Hierzu kann das Konturelement vorteilhaft mit Aussparungen, Einschnitten oder Löchern als Kontur versehen und drehbar gelagert sein.

Gemäß einer günstigen Ausgestaltung der Abscheidevorrichtung können das Verbindungselement und die erste Endscheibe, insbesondere das Verbindungselement und die Durchstrecköffnung, insbesondere das Verbindungselement und der Randbereich in Gebrauchsstellung der Abscheidevorrichtung derart kontaktlos sein, dass Gehäusedeckelgewinde und Innenraum des Filterelements gedrosselt fluidverbunden sind.

Um einen Flüssigkeitsablauf durch die Durchstrecköffnung zu reduzieren, ist bei einem vorteilhaften Ausführungsbeispiel der Abscheidevorrichtung der vorliegenden Erfindung das Verbindungselement im Bereich der Durchstrecköffnung derart in Bezug zum Filterelement angeordnet, dass der Abstand zwischen der in Bezug zur Montageachse des Abscheideelements radial äußeren Umfangswand des Verbindungselements und dem radial inneren Randbereich der ersten Endscheibe höchstens 3 mm, bevorzugt weniger als 2 mm und besonders bevorzugt weniger als 1 mm beträgt. Dieser Abstand kann auch als Breite des dort gebildeten Spaltes bezeichnet werden. Hierdurch wird lokal eine Drosselwirkung erzeugt und damit der Fluidfluss und Gasaustausch zwischen dem Verbindungselement und dem Abscheideelement minimiert.

Es wird nach einem weiteren Aspekt der Erfindung ein Abscheideelement für eine Abscheidevorrichtung vorgeschlagen, mit einem Gehäuse und mindestens einem darin angeordnetem Filterelement und mit einem zum Verschließen einer Stirnseite des Gehäuses ausgebildeten Gehäusedeckel mit mindestens einem ersten Gasdurchlass, der in Bezug zu einer bestimmungsgemäßen Montageachse des Abscheideelements an einer Anschlusseinrichtung zentral, insbesondere koaxial, angeordnet ist, einem dem ersten Gasdurchlass zugeordneten Gehäusedeckelgewinde, welches bei bestimmungsgemäßer Montage zum Aufschrauben auf ein Verbindungselementgewinde eines Verbindungselements der Abscheidevorrichtung ausgebildet ist und mindestens einem zweiten Gasdurchlass, der in Bezug zur bestimmungsgemäßen Montageachse des Abscheideelements radial außerhalb des ersten Gasdurchlasses angeordnet ist. Dabei weist das Filterelement eine sich in Bezug zur bestimmungsgemäßen Montageachse des Abscheideelements radial erstreckende und dem Gehäusedeckel zugewandte Stirnseite auf, welche durch eine erste Endscheibe begrenzt ist. Die Endscheibe weist eine zum Durchführen des Verbindungselements ausgebildete und dem ersten Gasdurchlass zugeordnete Durchstrecköffnung auf. Das Abscheideelement weist dabei wenigstens ein Konturelement auf, welches bei bestimmungsgemäßem Verschrauben des Abscheideelements mit dem Verbindungselement beispielsweise zur Aufnahme eines an dem Verbindungselement der Abscheidevorrichtung angeordneten Gegenkonturelements ausgebildet ist. Insbesondere weist das Konturelement wenigstens eine Kontur auf, die verwechslungssicher mit dem Gegenkonturelement zusammensetzbar ist. Erfindungsgemäß weist das Konturelement als wenigstens eine Kontur Aussparungen und/oder Einschnitte und/oder Löcher auf. Vorteilhaft kann die Kontur bei bestimmungsgemäßer Montage mit wenigstens einer an dem Gegenkonturelement angeordneten Gegenkontur zusammenwirken, insbesondere ineinander eingreifen.

Durch die Anordnung eines Konturelements an dem Abscheideelement, welches beim Montieren des Abscheideelements auf dem Verbindungselement mit einem am Verbindungselement angeordneten Gegenkonturelement nach einem "Schlüssel-Schloss"-Prinzip zusammenwirkt, kann bewirkt werden, dass nur ein Abscheideelement an ein Verbindungselement einer Abscheidevorrichtung montiert werden kann, das dafür vorgesehen ist. So kann gewährleistet werden, dass nur freigegebene Kombinationen von Abscheideelement und Verbindungselement zum Einsatz kommen.

Der Gehäusedeckel weist mindestens einen ersten Gasdurchlass, der in Bezug zu einer Montageachse des Abscheideelements an der Anschlusseinrichtung zentral, insbesondere koaxial, angeordnet ist, ein dem ersten Gasdurchlass zugeordnetes Gewinde, wobei dieses Gehäusedeckelgewinde zum Aufschrauben auf ein Gewinde des Verbindungselements ausgebildet ist, und mindestens einen zweiten Gasdurchlass auf, der in Bezug zur Montageachse des Abscheideelements radial außerhalb des ersten Gasdurchlasses angeordnet ist.

In dem Filterelement können beispielsweise mehrere aufeinander liegend gewickelte Lagen eines Koaleszenzfiltermediums, beispielsweise eines Glasfaserpapiers, angeordnet sein, in welchen kleine Flüssigkeitströpfchen zu größeren Tropfen vereint und durch Schwerkraft nach unten in Richtung des Flüssigkeitsauslasses drainiert werden.

Gemäß einer günstigen Ausgestaltung des Abscheideelements kann das Gegenkonturelement bei bestimmungsgemäßer Montage des Abscheideelements auf das Verbindungselement durch das Konturelement wenigstens bereichsweise durchgreifen.

Das Konturelement kann beispielsweise als radial innerer Randbereich der Endscheibe des Filterelements des Abscheideelements ausgebildet sein. Das Gegenkonturelement des Verbindungselements kann beispielsweise am Umfangselement des Verbindungselements angeordnet sein oder als dieses ausgebildet sein. Das Umfangselement kann beispielsweise in Richtung des Innenraums des Abscheideelements verlängert sein. Bevorzugt wird hier der Durchmesser des Gewindegrundes verwendet. Diese Verlängerung kann maßlich so abgestimmt sein, dass diese beim Aufsetzen des Abscheideelements auf das Verbindungselement einer nicht dafür vorgesehenen Abscheidevorrichtung auf den Randbereich des Abscheideelements trifft und somit ein Aufschrauben verhindert wird. Nur maßlich abgestimmte Abscheideelemente, deren Randbereich den geeigneten Öffnungsbereich vorsieht, lassen sich somit montieren, da das Gegenkonturelement in eine zentrale Öffnung des Randbereichs der Endscheibe des Filterelements eingreifen oder durch diese durchgreifen kann.

Gemäß einer günstigen Ausgestaltung des Abscheideelements kann die Durchstrecköffnung von einem in Bezug zur bestimmungsgemäßen Montageachse des Abscheideelements radial inneren Randbereich der ersten Endscheibe begrenzt sein, wobei das Konturelement als radial innerer, insbesondere kreisförmiger, Randbereich der Durchstrecköffnung ausgebildet sein kann und das Umfangselement das Gegenkonturelement aufweisen kann. Dabei kann ein Außendurchmesser des Gegenkonturelements kleiner als ein Innendurchmesser des Konturelements sein.

Das Konturelement kann beispielsweise als radial innerer Randbereich der Endscheibe des Filterelements des Abscheideelements ausgebildet sein. Das Gegenkonturelement des Verbindungselements kann beispielsweise am Umfangselement des Verbindungselements angeordnet sein oder als dieses ausgebildet sein. Das Umfangselement kann beispielsweise zum Innenraum des Abscheideelements verlängert sein. Bevorzugt wird hier der Durchmesser des Gewindegrundes verwendet. Diese Verlängerung kann maßlich so abgestimmt sein, dass diese beim Aufsetzen des Abscheideelements auf das Verbindungselement einer nicht dafür vorgesehenen Abscheidevorrichtung auf den Randbereich des Abscheideelements trifft und somit ein Aufschrauben verhindert wird. Nur maßlich abgestimmte Abscheideelemente, deren Randbereich den geeigneten Öffnungsbereich vorsieht, lassen sich somit montieren, da das Gegenkonturelement in eine zentrale Öffnung des Randbereichs der Endscheibe des Filterelements eingreifen oder durch diese durchgreifen kann.

Eine zusätzliche Gegenkontur im Bereich des Verbindungselementgewindes im Innenraum von Abscheideelementen bewirkt in Kombination mit einer passend ausgeformten Kontur des Abscheideelements eine Art "Schlüssel-Schloss"-System. Zur Erzeugung zusätzlicher Varianten kann die Verlängerung des Umfangselements zusätzlich mit einer Gegenkontur versehen werden, die zu Aussparungen, Einschnitten und Löchern der Kontur an dem Abscheideelement in einer Art gegenseitiger Verrastung passen. Diese Kontur taucht in die entsprechenden Aussparungen, Einschnitte oder Löcher ein und ermöglicht somit ein Aufschrauben des Abscheideelements.

Gemäß einer günstigen Ausgestaltung des Abscheideelements kann wenigstens eines von Konturelement und Gegenkonturelement um die Montageachse drehbar gelagert sein. Da das Abscheideelement mit einem Gewinde auf das Verbindungselement aufgeschraubt wird, ist eine drehbare Lagerung wenigstens eines der beiden als Konturelement und Gegenkonturelement angeordneten zusätzlichen Bauteile erforderlich, wenn das Konturelement und das Gegenkonturelement bei der Montage des Abscheideelements auf das Verbindungselement in einer Art gegenseitiger Verrastung ineinandergreifen,

Gemäß einer günstigen Ausgestaltung des Abscheideelements kann mindestens eine Aufnahme für ein Dichtungs- und Dämpfungselement vorgesehen sein, das zwischen dem Filterelement, insbesondere zwischen der ersten Endscheibe, und einer an einem Innenraum des Gehäuses zugewandten Innenseite des Gehäusedeckels ausgebildeten Dichtfläche dichtend verpresst ist. Dabei kann das Dichtungs- und Dämpfungselement dazu ausgebildet sein, eine Reinseite des Abscheideelements von einer ungereinigtes Gas aufweisenden Rohseite des Gehäuses abzudichten und in Bezug zur bestimmungsgemäßen Montageachse des Abscheideelements axial gerichtete Schwingungen des Filterelements abzudämpfen.

Das Dichtungs- und Dämpfungselement kann beispielsweise in Bezug zur Montageachse des Abscheideelements koaxial dichtend verpresst sein zwischen der ersten Endscheibe, insbesondere zwischen mindestens einem sich axial in Richtung zum Gehäusedeckel hin erstreckenden Vorsprung, beispielsweise zwischen mindestens einem senkrechten Steg oder mindestens einer Ringnut, der ersten Endscheibe und dem Gehäusedeckel.

Alternativ zu einer axialen Verpressung des Dichtungs- und Dämpfungselements kann das Dichtungs- und Dämpfungselement auch in Bezug zur Montageachse des Abscheideelements radial zwischen der ersten Endscheibe, insbesondere zwischen mindestens einem sich axial in Richtung zum Gehäusedeckel hin erstreckenden Vorsprung, beispielsweise zwischen mindestens einem senkrechten Steg oder mindestens einer Ringnut, der ersten Endscheibe und dem Gehäusedeckel verpresst sein.

Vorteilhafterweise ist das Dichtungs- und Dämpfungselement derart axial verpresst zwischen der ersten Endscheibe und dem Gehäusedeckel, dass das Dichtungs- und Dämpfungselement dem Druck zwischen Rohseite und Reinseite standhalten kann.

Die in Bezug zur Montageachse des Abscheideelements axiale oder koaxiale Erstreckung oder Höhe oder Stärke des Dichtungs- und Dämpfungselements beträgt vorteilhafterweise mindestens einen Millimeter, insbesondere mindestens zwei Millimeter, beispielsweise mindestens drei Millimeter.

Das Dichtungs- und Dämpfungselement ist vorteilhafterweise aus mindestens einem Material gebildet ist, das sowohl eine Temperaturbeständigkeit von über 100 Grad Celsius als auch eine Langzeitölbeständigkeit, insbesondere eine Ölbeständigkeit nach DIN EN 60811-2-1, aufweist.

Das Dichtungs- und Dämpfungselement ist also vorteilhafterweise aus Material mit gleichzeitiger hoher thermischer Beständigkeit und hoher chemischer Beständigkeit, insbesondere hoher Ölbeständigkeit. Beispielsweise kann das Dichtungs- und Dämpfungselement im Wesentlichen aus mindestens einem Fluorelastomer, beispielsweise aus Fluorkautschuk (FKM), etwa aus FKM mit 60 - 80 Shore A, oder aus Fluorkarbonkautschuk und/oder aus mindestens einem Gummiwerkstoff, beispielsweise aus mindestens einem peroxidisch vernetztem Gummiwerkstoff, etwa aus Hydriertem Acrylnitrilbutadien-Kautschuk (HNBR), gebildet sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Längsschnitt durch eine Abscheidevorrichtung nach einem Ausführungsbeispiel der Erfindung;
- Fig. 2: einen vergrößerten Ausschnitt aus dem Bereich des Verbindungselements der Abscheidevorrichtung nach Figur 1;
- Fig. 3: eine isometrische Darstellung des Verbindungselements der Abscheidevorrichtung nach einem Ausführungsbeispiel der Erfindung;
- Fig. 4: eine isometrische Darstellung des Verbindungselements der Abscheidevorrichtung nach einem weiteren Ausführungsbeispiel der Erfindung;
- Fig. 5: eine isometrische Ansicht der Abscheidevorrichtung nach einem Ausführungsbeispiel der Erfindung in einer Explosionsdarstellung;
- Fig. 6: einen vergrößerten Ausschnitt aus dem Bereich des Konturelements und Gegenkonturelements der Abscheidevorrichtung nach einem weiteren Ausführungsbeispiel der Erfindung in einer Schnittdarstellung;
- Fig. 7: einen Längsschnitt durch eine Abscheidevorrichtung nach einem weiteren Ausführungsbeispiel der Erfindung in bestimmungsgemäß hängender Anordnung;
- Fig. 8: einen Längsschnitt durch eine an eine Anschlusseinrichtung montierte Abscheidevorrichtung nach einem Ausführungsbeispiel der Erfindung;
- Fig. 9: eine isometrische Ansicht eines Abscheideelements nach einem Ausführungsbeispiel der Erfindung;
- Fig. 10: einen Längsschnitt durch das Abscheideelement nach Figur 9;
- Fig. 11: ein Konturelement in einer perspektivischen Ansicht; und
- Fig. 12: das Konturelement aus Fig. 11 in einer Ansicht aus entgegengesetzter Blickrichtung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

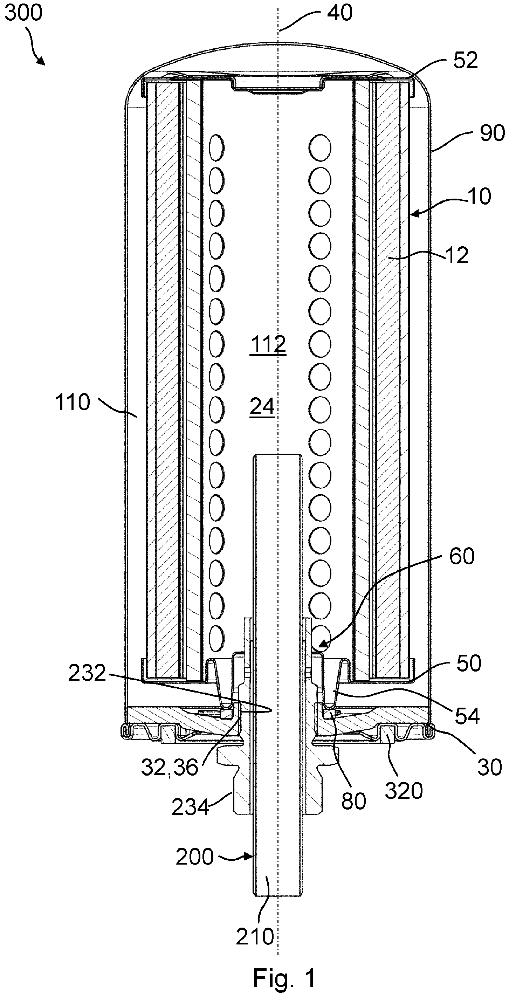

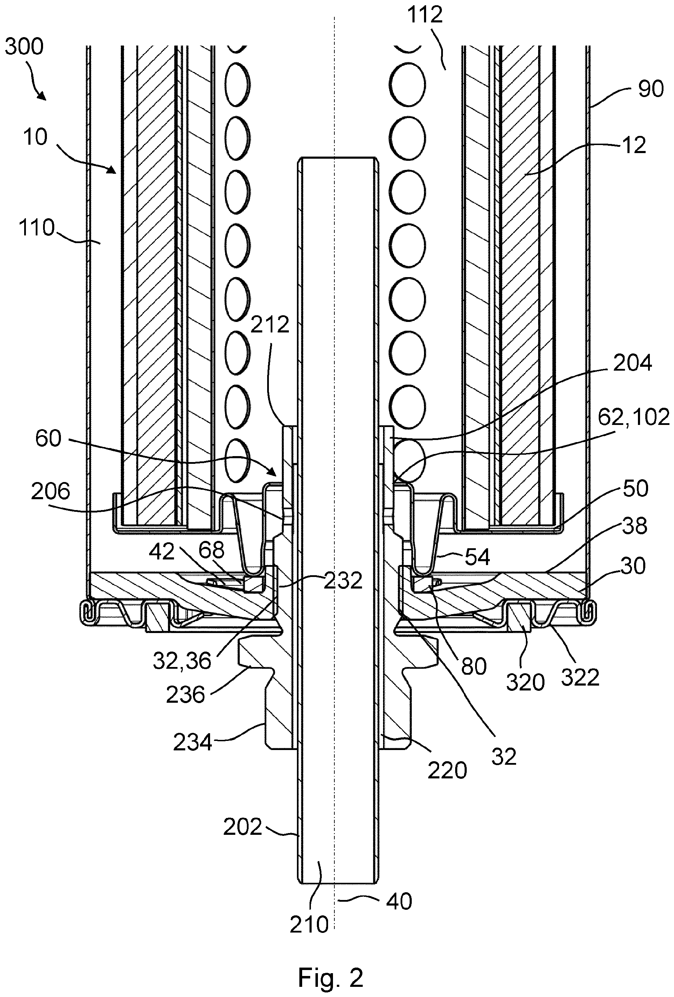

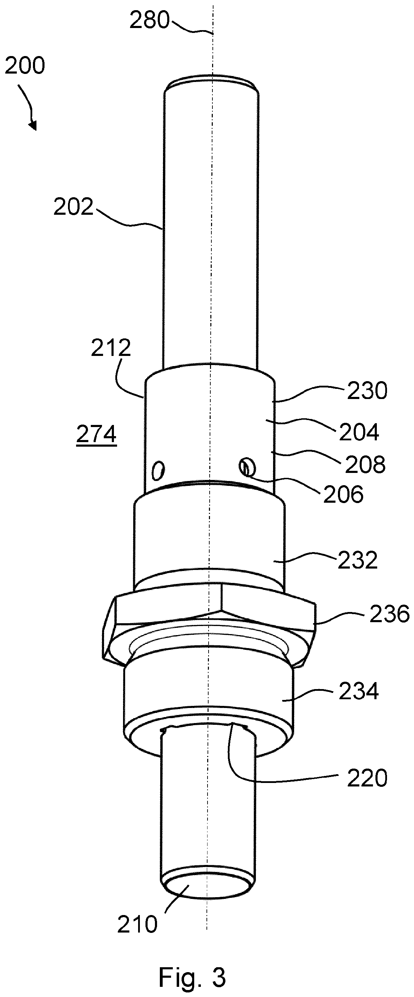

Figur 1 zeigt einen Längsschnitt durch eine Abscheidevorrichtung 300 nach einem Ausführungsbeispiel der Erfindung, während in Figur 2 ein vergrößerter Ausschnitt aus dem Bereich des Verbindungselements 200 der Abscheidevorrichtung 300 nach Figur 1 dargestellt ist. Figur 3 zeigt eine isometrische Darstellung des Verbindungselements 200.

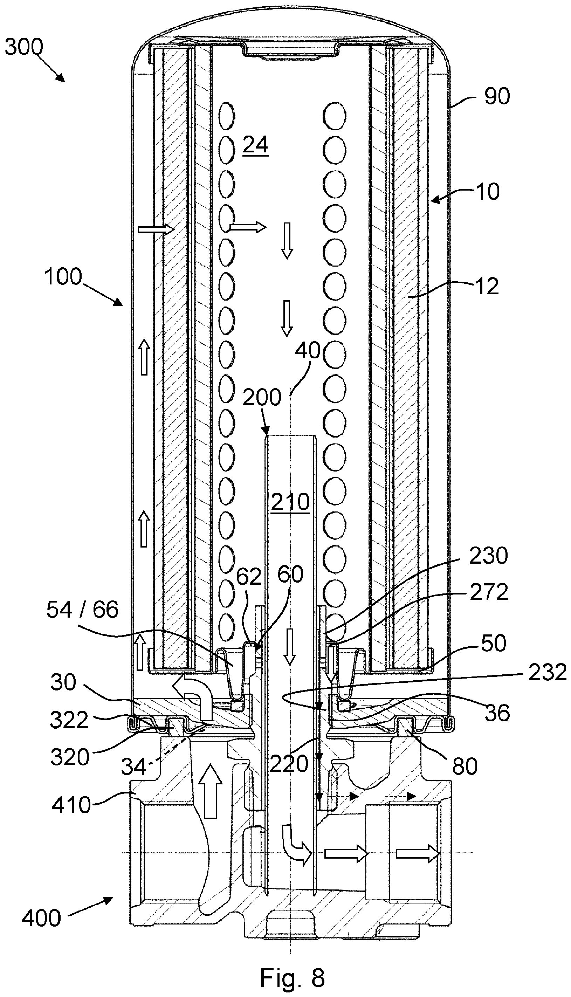

Die Abscheidevorrichtung 300 dient zur Abtrennung wenigstens eines Fluids aus Gas, insbesondere von aus flüssigem Fluid gebildetem Aerosol aus Gas. Das flüssige Fluid kann beispielsweise Öl, Kraftstoff, Hydraulikflüssigkeit oder Kühlmittel sein. Das Gas kann insbesondere Luft einer Anschlusseinrichtung 400 sein (in Figur 8 dargestellt), insbesondere eines Kompressors, einer Druckluftanlage oder einer Vakuumpumpe.

Die Abscheidevorrichtung 300 umfasst ein Abscheideelement 100 mit Gehäuse 90 mit Gehäusedeckel 30 und einem darin angeordneten Filterelement 10. Der Gehäusedeckel 30 weist ein Gehäusedeckelgewinde 36 auf, das zum Aufschrauben auf ein Verbindungselementgewinde 232 eines Verbindungselements 200 ausgebildet ist.

Die Abscheidevorrichtung 300 umfasst weiter einen ersten Gasdurchlass 32, der in Bezug zu einer Montageachse 40 des Abscheideelements 100 an einer Anschlusseinrichtung 400 zentral, insbesondere koaxial, angeordnet ist und dem das Gehäusedeckelgewinde 36 zugeordnet ist.

Die Abscheidevorrichtung 300 umfasst weiter einen zweiten Gasdurchlass 34 (in Figur 1 nicht erkennbar), der in Bezug zur Montageachse 40 des Abscheideelements 100 radial außerhalb des ersten Gasdurchlasses 32 angeordnet ist.

Die Abscheidevorrichtung 300 umfasst weiter ein zur Verbindung des Abscheideelements 100 der Abscheidevorrichtung 300 mit der Anschlusseinrichtung 400 ausgebildetes Verbindungselement 200, das ein Verbindungselementgewinde 232 sowie ein Leitungselement 202 aufweist. An das Verbindungselementgewinde 232 schließt ein Umfangselement 204 an, das sich in axialer Richtung 40 in einen Innenraum 24 des Abscheideelements 100 erstreckt. Das Verbindungselementgewinde 232 sowie das Umfangselement 204 umgeben das Leitungselement 202. Zwischen Leitungselement 202 und Umfangselement 204 ist wenigstens ein in einer axialen Richtung 280 verlaufender Fluidkanal 220 ausgebildet.

Das Umfangselement 204 weist einen oder mehrere Durchbrüche 206 auf, welche das Umfangselement 206 in radialer Richtung von seiner Außenseite 274 bis zu dem Fluidkanal 220 durchdringen.

Das Abscheideelement 100 weist ein Dichtungs- und Dämpfungselement 80 zur Abdichtung einer Reinseite 112 des Abscheideelements 100 von einer ungereinigtes Gas aufweisenden Rohseite 110 des Gehäuses 90 und zum Abdämpfen in Bezug zur Montageachse 40 des Abscheideelements 100 axial gerichteter Schwingungen des Filterelements 10 zwischen dem Filterelement 10 und einer an der dem Innenraum des Gehäuses 90 zugewandten Innenseite 38 des Gehäusedeckels 30 ausgebildeten Dichtfläche 42 auf. Das Dichtungs- und Dämpfungselement 80 kann als O-Ring ausgebildet sein, welcher dichtend verpresst ist. Als Dicht- und Dämpfungselement kann statt einem O-Ring auch eine Flachdichtung oder Formdichtung eingesetzt werden.

Das Verbindungselement 200 und die erste Endscheibe 50, insbesondere das Verbindungselement 200 und die Durchstrecköffnung 60, insbesondere das Verbindungselement 200 und der radial innere Randbereich 62 einer Durchstrecköffnung 60 der Endscheibe 50 des Filterelements 10 in Gebrauchsstellung der Abscheidevorrichtung 300 sind derart kontaktlos ausgebildet, dass Gehäusedeckelgewinde 36 und Innenraum des Filterelements 10 gedrosselt fluidverbunden sind.

Das Abscheideelement 100 weist wenigstens ein Konturelement 102 auf, welches bei bestimmungsgemä-ßem Verschrauben des Abscheideelements 100 mit dem Verbindungselement 200 zum verwechslungssicheren Zusammenwirken mit einem an dem Verbindungselement 200 angeordneten Gegenkonturelement 212 ausgebildet ist.

Durch die Anordnung eines Konturelements 102 an dem Abscheideelement 100, welches beim Montieren des Abscheideelements 100 auf dem Verbindungselement 200 mit einem am Verbindungselement 200 angeordneten Gegenkonturelement 212 nach einem "Schlüssel-Schloss"-Prinzip zusammenwirkt, kann bewirkt werden, dass nur ein Abscheideelement 100 an das Verbindungselement 200 montiert werden kann, das dafür vorgesehen ist. So kann gewährleistet werden, dass nur freigegebene Kombinationen von Abscheideelement 100 und Verbindungselement 200 zum Einsatz kommen.

Das Konturelement 102 kann vorteilhaft als radial innerer, insbesondere kreisförmiger Randbereich 62 einer Durchstrecköffnung 60 in einer ersten Endscheibe 50 des Filterelements 10 ausgebildet sein, während das Umfangselement 204 das Gegenkonturelement 212 aufweisen kann. Dabei kann das Gegenkonturelement 212 bei bestimmungsgemäßer Montage des Abscheideelements 100 auf das Verbindungselement 200 durch das Konturelement 102 durchgreifen, wobei insbesondere ein Außendurchmesser des Gegenkonturelements 212 kleiner als ein Innendurchmesser des Konturelements 102 sein kann.

Das Umfangselement 204 kann beispielsweise zum Innenraum 24 des Abscheideelements 100 verlängert sein. Bevorzugt wird hier der Durchmesser des Gewindegrundes verwendet und mit zusätzlichen Durchbrüchen 206 als Verbindung zu Fluidkanälen 220 versehen. Diese Verlängerung kann maßlich so abgestimmt sein, dass diese beim Aufsetzen einer nicht dafür vorgesehenen Abscheideelements 100 auf das Verbindungselement 200 auf den Randbereich 62 des Abscheideelements 100 trifft und somit ein Aufschrauben verhindert wird. Nur maßlich abgestimmte Abscheideelemente 100, deren Randbereich 62 den geeigneten Öffnungsbereich vorsieht, lassen sich somit montieren.

Das als verlängertes Umfangselement 204 ausgebildete Gegenkonturelement 212 ist insbesondere in Figur 3 in der isometrischen Darstellung des Verbindungselements 200 erkennbar.

Das Umfangselement 204 umgibt das Leitungselement 202, welches mit einem hohlrohrförmigen Innenraum 210 die Verbindung zum ersten Gasdurchlass 32 des Abscheideelements 100 darstellt. Zwischen Leitungselement 202 und Umfangselement 204 sind mehrere Ablaufkanäle 220 ausgebildet, welche mittels radial verlaufenden als Bohrung ausgebildeten Durchbrüchen 206 mit der Außenseite 274 des Verbindungselements 200 in Verbindung stehen und ein Abfließen von abgetrenntem flüssigen Fluid ermöglichen. Unterhalb des Umfangselements 204 umgibt das Verbindungselementgewinde 232 das Leitungselement 202. Daran anschließend sind ein Sechskant 236 mit einem folgenden Gewinde 234 zur Verbindung mit einer Anschlusseinrichtung 400 (siehe Figur 8) angeordnet.

Der Fluidkanal 220 verläuft zwischen Leitungselement 202 und Umfangselement 204 in einer axialen Richtung 280. Je nach Länge des das Leitungselement 202 umgebende Umfangselement 204 kann es nötig sein, dass der Fluidstand in dem Filterelement 10 erst eine gewisse Höhe überschreiten muss, bis das flüssige Fluid über den Fluidkanal 220 ablaufen kann.

Vorteilhaft weist deshalb die erfindungsgemäße Abscheidevorrichtung 300 ein Verbindungselement 200 auf, bei dem das Umfangselement 204 einen oder mehrere Durchbrüche 206 aufweist, welche das Umfangselement 204 in radialer Richtung von seiner Außenseite 208 bis zu dem Fluidkanal 220 durchdringen. Diese Durchbrüche 206, welche beispielsweise als Bohrungen von der Außenseite 208 des Umfangselements 204 radial nach innen bis zum Fluidkanal 220 ausgebildet sein können, ermöglichen, dass das flüssige Fluid bereits bei einem geringeren Fluidstand in den Fluidkanal 220 gelangen und ablaufen können. Gerade bei relativ lang ausgebildetem Umfangselement 204 kann das abgetrennte flüssige Fluid so bereits bei niedrigem Fluidstand günstig abfließen.

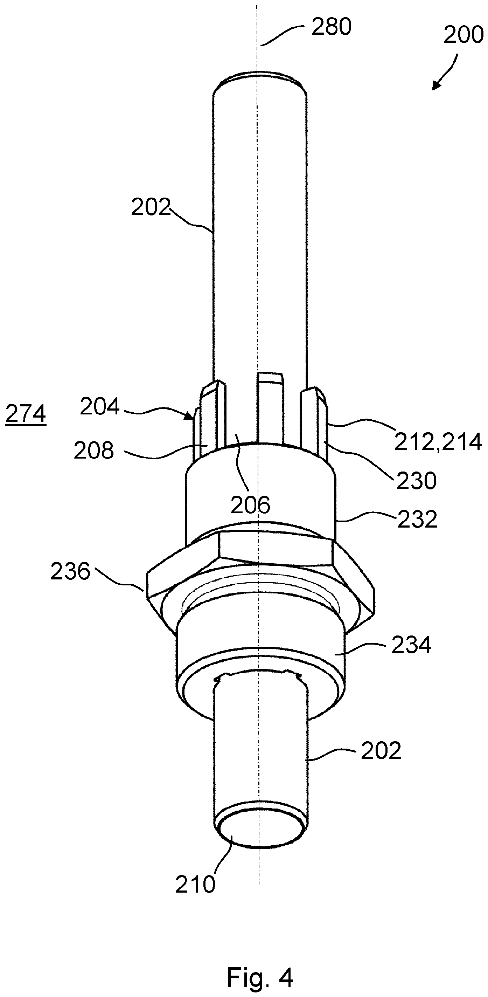

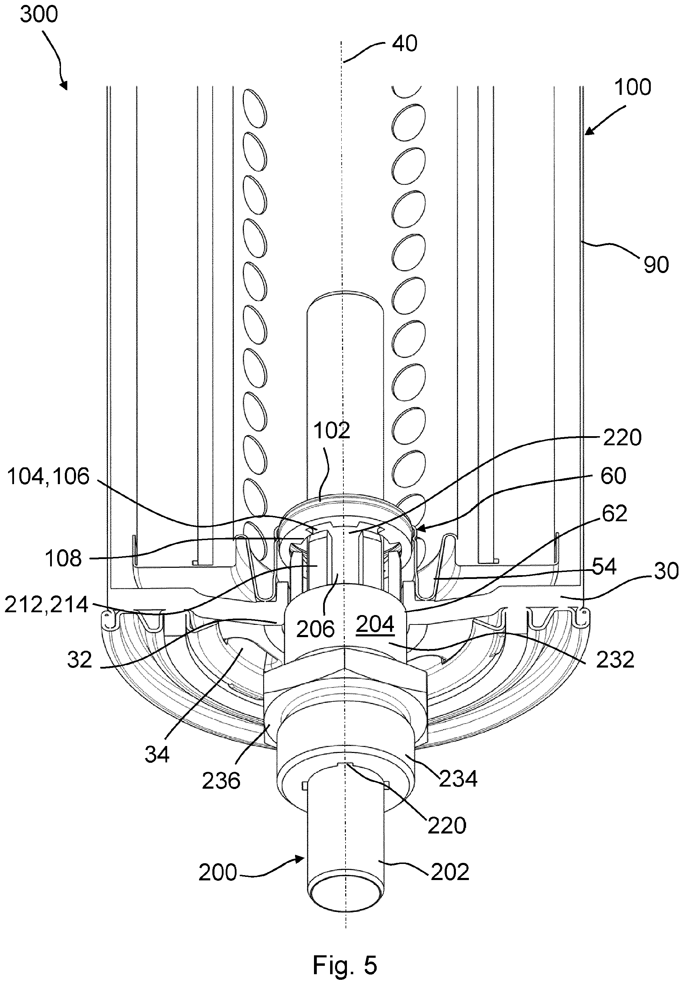

Figur 4 zeigt eine isometrische Darstellung eines Verbindungselements 200 der Abscheidevorrichtung 300 nach einem weiteren Ausführungsbeispiel der Erfindung, während in Figur 5 eine isometrische Ansicht einer Abscheidevorrichtung 300 mit einem solchen Verbindungselement 200 in einer Explosionsdarstellung dargestellt ist. Dabei ist das Abscheideelement 100 noch nicht zur Gänze auf das Verbindungselement 200 aufgeschraubt.

Bei dieser Abscheidevorrichtung 300 weist das Konturelement 102 des Abscheideelements 100 eine Kontur 104, insbesondere Aussparungen 106 oder Einschnitte auf, welche bei bestimmungsgemäßer Montage mit einer an dem Gegenkonturelement 212 des Verbindungselements 200 angeordneten Gegenkontur 214 zusammenwirkt, insbesondere ineinander eingreift.

Eine zusätzliche Gegenkontur 214 im Bereich des Verbindungselementgewindes 232 im Innenraum des Abscheideelements 100 bewirkt in Kombination mit einer passend ausgeformten Kontur 104 des Abscheideelements 100 eine Art "Schlüssel-Schloss"-System. Zur Erzeugung zusätzlicher Varianten kann die Verlängerung des Umfangselements 204 zusätzlich mit einer Gegenkontur 214 versehen werden, die zu Aussparungen 106, Einschnitten oder Löchern der Kontur 104 an dem Abscheideelement 100 in einer Art gegenseitiger Verrastung passen. Diese Gegenkontur 214 taucht in die entsprechenden Aussparungen 106, Einschnitte oder Löcher ein und ermöglicht somit ein Aufschrauben des Abscheideelements 100 bei gleichzeitigem Ineinandergreifen von Kontur 104 und Gegenkontur 214.

Alternativ kann die Kontur 104 auch zweiteilig ausgeführt sein. Ein erstes Teil der Kontur 104 kann eine einfache, drehbar gelagerte Scheibe mit der Schlüssel-Schloss-Kontur sein. Das zweite Teil kann vorteilhaft als Verliersicherung für das erste Teil dienen und das erste Teil in Position halten.

Die Gegenkontur 214 kann beim Aufsetzen des Abscheideelements 100 auf das Verbindungselement 200 in die zwischen Vorsprüngen 108 im Randbereich 62 angeordneten Aussparungen 106 eingreifen, sodass das Abscheideelement 100 verwechslungssicher auf das Verbindungselement 200 aufgeschraubt werden kann. Dazu kann der Randbereich 62 zweckmäßig in der Endscheibe 50 des Filterelements 10 um die Montageachse 40 drehbar gelagert sein. Alternativ kann auch das Gegenkonturelement 212 um die Montageachse 40 drehbar gelagert sein.

Die Durchbrüche 206 in Umfangsrichtung des Verbindungselements 200 als fluidische Verbindung zu den Ablaufkanälen 220 sind bei diesem Ausführungsbeispiel innerhalb der Gegenkontur 214 angeordnet.

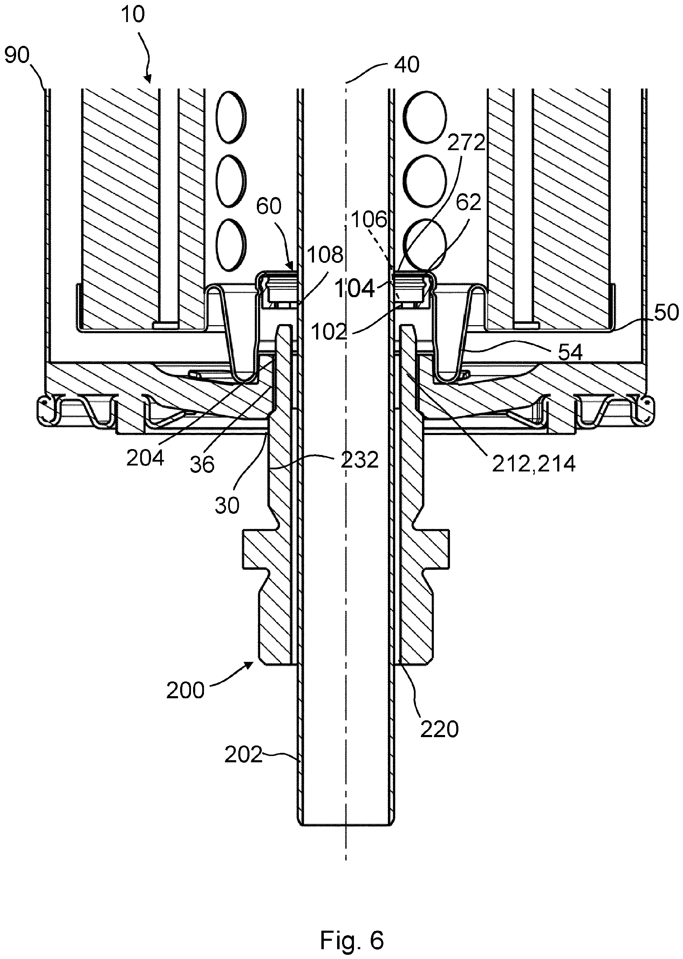

Figur 6 zeigt einen vergrößerten Ausschnitt aus dem Bereich des Konturelements 102 und Gegenkonturelement 212 der Abscheidevorrichtung 300 nach einem weiteren Ausführungsbeispiel der Erfindung in einer Schnittdarstellung. Das Abscheideelement 100 ist noch nicht zur Gänze auf das Verbindungselement 200 aufgeschraubt, sondern lediglich auf das Verbindungselement 200 aufgesetzt. Bei diesem Ausführungsbeispiel greift die Gegenkontur 214 der Gegenkonturelemente 212 in die Kontur 104, welche als Aussparungen 106 (im Schnitt nicht erkennbar) zwischen Vorsprüngen 108 des Konturelements 102 ausgebildet ist. Der Randbereich 62 der Durchstrecköffnung 60 der Endscheibe 50 schließt direkt an den Außenumfang des Gegenkonturelements 212 an. Die Endscheibe 50 geht über eine Ringmulde 54 in den radial inneren Randbereich 62 über. Die Ringmulde 54 kann die Funktion eines Fluidstauraums 66 für das abgetrennte flüssige Fluid erfüllen. Übersteigt ein Fluidlevel des abgetrennten Fluids eine bestimmte Höhe, so kann das flüssige Fluid in den Fluidkanal 220 gelangen und abfließen.

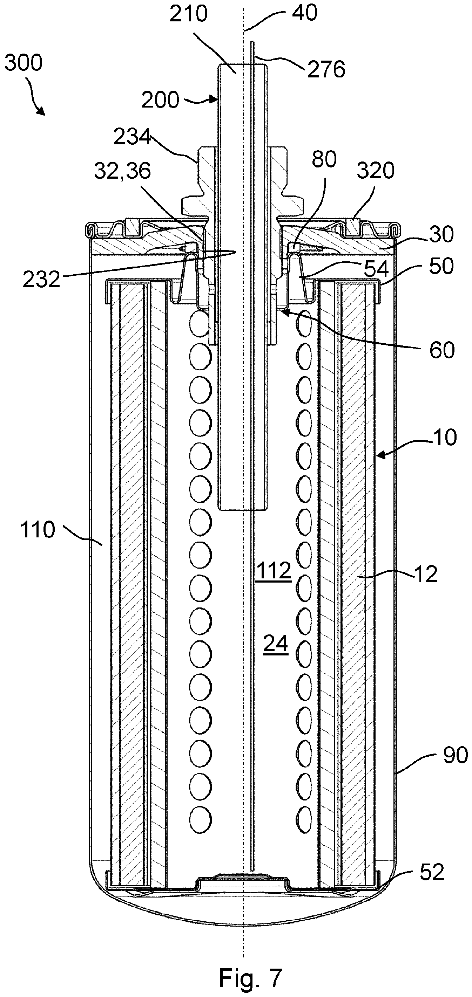

In Figur 7 ist ein Längsschnitt durch eine Abscheidevorrichtung 300 nach einem weiteren Ausführungsbeispiel der Erfindung in bestimmungsgemäß hängender Anordnung dargestellt. Das abgetrennte flüssige Fluid sammelt sich bei dieser Anordnung aufgrund der Schwerkraft nicht im Bereich der ersten Endscheibe 50, sondern am gegenüber liegenden Ende der zweiten Endscheibe 52 des Filterelements 10. Um das abgetrennte flüssige Fluid abzuführen, wird deshalb im Innenraum 210 des Verbindungselements 200 ein Absaugrohr 276 angeordnet, über welches das flüssige Fluid abgesaugt werden kann.

Figur 8 zeigt einen Längsschnitt durch eine an eine Anschlusseinrichtung 400 montierte Abscheidevorrichtung 300 nach einem Ausführungsbeispiel der Erfindung.

Das Abscheideelement 100 ist austauschbar an einem Anschlusskopf 410 der Anschlusseinrichtung 400, in Fig. 8 unten, befestigt. Der Anschlusskopf 410 dient als Anschlusseinrichtung für entsprechende Luftleitungen und Ölleitungen zur Verbindung mit dem entsprechenden Gerät, beispielsweise einem Kompressor, einer Druckluftanlage oder einer Vakuumpumpe. In Fig. 8 ist der Anschlusskopf 410 lediglich schematisch dargestellt.

Ein Verbindungselement 200, nämlich ein hohler, rohrstutzenartiger Verbindungsnippel verbindet das Abscheideelement 100 mit dem Anschlusskopf 410. Zum Abführen des gereinigten Gases aus der Abscheidevorrichtung 300 umgibt das Verbindungselement 200 ein Leitungselement 202 mit einem gasleitenden Innenraum 210.

Das Abscheideelement 100 umfasst ein becherförmiges Gehäuse 90. In dem Gehäuse 90 ist beispielhaft ein als ringförmiges Koaleszenzelement ausgebildetes Filterelement 10 angeordnet. Als Filtermedium 12 kann das Filterelement 10 beispielhaft eine Glasfasermatte aufweisen, die mehrfach ringförmig gewickelt und stirnseitig durch eine zweite Endscheibe 52 und eine dem Anschlusskopf 410 zugewandte erste Endscheibe 50 begrenzt ist. Als weiteres Filtermedium kann im Inneren der Glasfaserwicklung ein Vlies angeordnet sein.

Die der Anschlusseinrichtung 400 zugewandte Öffnung des Gehäuses 90 ist mit einem Gehäusedeckel 30 verschlossen. Das Abscheideelement 100 ist mit einer an dem Gehäusedeckel 30 in einer Dichtungshalterung 322 angeordneten Dichtung 320 gegen den Anschlusskopf 410 gedichtet.

Das Leitungselement 202 ragt in den Innenraum 24 des Filterelements 10 hinein und erstreckt sich durch einen zentralen ersten Gasdurchlass 32 als Gasauslass des Gehäusedeckels 30 bis zu einem außerhalb des Abscheideelements 100 angeordneten und zum Verbinden des Verbindungselements 200 mit der Anschlusseinrichtung 400 ausgebildeten Anschlusskopf 410.

Zum Zuführen des zu reinigenden Gases weist der Gehäusedeckel 30 einen in Bezug zur Montageachse 40 der Abscheidevorrichtung 300 radial außerhalb des ersten Gasdurchlasses 32 angeordneten zweiten Gasdurchlass 34 auf. Dieser zweite Gasdurchlass 34 ist der Rohseite 110 des Abscheideelements 100 zugeordnet.

Zum Abführen des abgeschiedenen flüssigen Fluids aus dem Abscheideelement 100 weist das Verbindungselement 200 einen sich vom Innenraum des Abscheideelements 100 zum Anschlusskopf 410 des Verbindungselements 200 hin erstreckenden Fluidkanal 220 auf. Dieser Fluidkanal 220 ist innerhalb des Verbindungselements 200 angeordnet, nämlich zwischen dem rohrförmigen Leitungselement 202 und dem das Leitungselement 202 radial umgebenden Umfangselement 204 des Verbindungselements 200.

Der Strömungsweg des Gases in der Abscheidevorrichtung 300 ist in Figur 8 mittels Blockpfeilen dargestellt. Rohgas strömt durch den zweiten Gasdurchlass 34 als Gaseinlass in das Gehäuse 90 ein, tritt seitlich am Filterelement 10 hoch und durchströmt dieses von außen nach innen. Das im Filterelement 10 abgeschiedene flüssige Fluid sammelt sich in einer Ringmulde 54 der ersten Endscheibe 50 zu einer definierten Höhe, strömt dann in den Fluidkanal 220 zwischen Leitungselement 202 und einem das Leitungselement 202 umgebenden Bereich des Verbindungselements 200 und wird dann abgeführt. Der Strömungsweg des flüssigen Fluids in der Abscheidevorrichtung 300 ist in Figur 8 mittels gestrichelten Pfeilen dargestellt.

In der Regel ist die Abscheidevorrichtung 300 betriebsbereit in der Orientierung angeordnet, die in der Figur 1, bzw. der Figur 8 gezeigt ist. Sie kann jedoch auch in anderen Orientierungen angeordnet sein. Wenn im Folgenden von unten, oben oder dergleichen die Rede ist, so bezieht sich dies, wenn nicht anders erwähnt, auf die Darstellung in den Figuren 1 und 8.

Das Gehäuse 90, das Filterelement 10 und das Verbindungselement 200 sind bei der betriebsbereit montierten Abscheidevorrichtung 300 jeweils koaxial zu einer gedachten Montageachse 40. Um die Montageachse 40 kann das Abscheideelement 100 mittels des Verbindungselements 200 auf den Anschlusskopf 410 geschraubt und von diesem abgeschraubt werden.

Wenn im Folgenden von radial, axial, koaxial oder umfangsmäßig oder dergleichen die Rede ist, so bezieht sich dies, falls nicht anders erwähnt, auf die Montageachse 40.

Die dem Gehäusedeckel 30 zugewandte erste Endscheibe 50 ist etwa ringförmig. Sie weist eine koaxiale Montageöffnung oder Durchstrecköffnung 60 für das Verbindungselement 200 auf. Radial zwischen der Durchstrecköffnung 60 und dem Filtermedium 12 des Filterelements 10 ist die erste Endscheibe 50 mehrfach gebogen, so dass sich eine umfangsmäßige Ringmulde 54 ergibt, die zu einem Elementinnenraum 24 des Filterelements 10 hin offen ist.

Ein radial innerer Randbereich 62 der ersten Endscheibe 50 umgibt die Durchstrecköffnung 60. Er zeigt zu dem in der Durchstrecköffnung 60 angeordneten Verbindungselement 200. Um die Montage des Abscheideelements 100 zu erleichtern, kann der radial innere Randbereich 62 der ersten Endscheibe 50 zur Abstützung am Verbindungselement 200 ausgebildet sein. Bei den in den Figuren 1 bis 10 gezeigten vorteilhaften Ausführungsbeispielen dient der sich radial erstreckende innere Randbereich 62 oder der sich in Richtung zum Verbindungselement 200 hin erstreckende innere Randbereich 62 zur Abstützung der ersten Endscheibe 50 an der äußeren Umfangsseite 230 des Verbindungselements 200. Dies ist hilfreich, wenn bei der Montage des Abscheideelements 100 der Gehäusedeckel 30 an der äußeren Umfangsseite 230, bzw. dem Umfangselement 204 des Verbindungselement 200 entlanggeführt wird, bis das Gewinde 36 des Gehäusedeckels 30 mit dem Gewinde 232 des Verbindungselements 200 in Kontakt tritt.

Ein Innendurchmesser der Durchstrecköffnung 60 ist größer als ein Außendurchmesser des Verbindungselements 200 dort. Zwischen der radial äußeren Umfangswand 230, bzw. dem Umfangselement 204 des Verbindungselements 200 und dem radial inneren Randbereich 62 der Durchstrecköffnung 60 verbleibt ein ringförmiger, koaxialer Spalt 272.

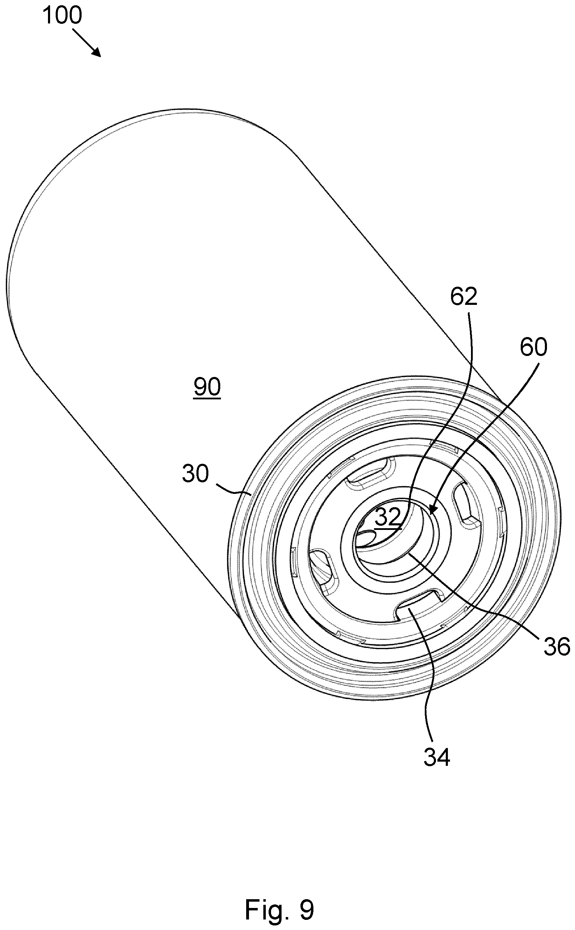

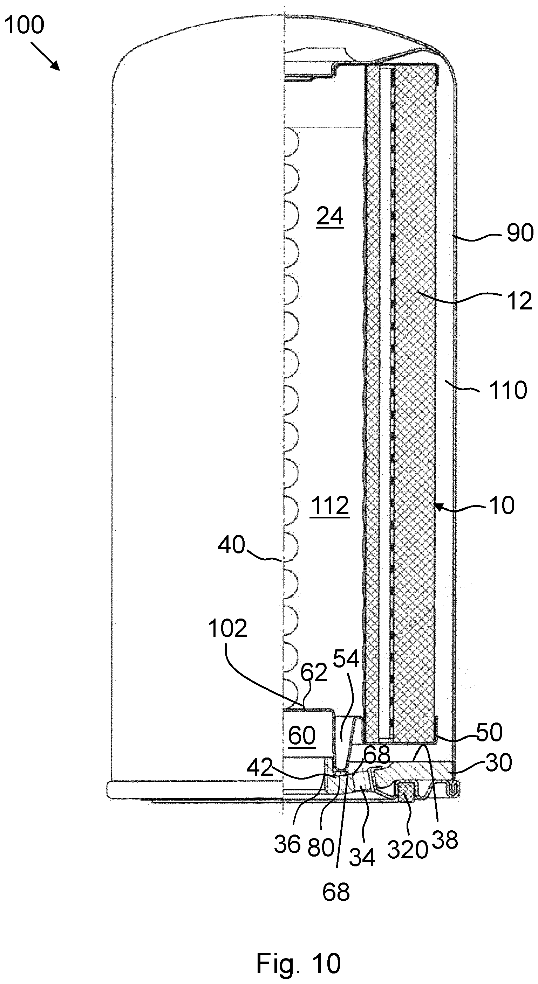

Figur 9 zeigt eine isometrische Ansicht eines Abscheideelements 100 nach einem Ausführungsbeispiel der Erfindung, während in Figur 10 ein Längsschnitt durch das Abscheideelement 100 nach Figur 9 dargestellt ist.

Das Abscheideelement 100 für eine Abscheidevorrichtung 300 wie in den Figuren 1 bis 8 dargestellt, umfasst ein Gehäuse 90 und mindestens ein darin angeordnetes Filterelement 10 sowie einen zum Verschlie-ßen einer Stirnseite des Gehäuses 90 ausgebildeten Gehäusedeckel 30.

Der Gehäusedeckel 30 weist einen ersten Gasdurchlass 32, der in Bezug zu einer bestimmungsgemäßen Montageachse 40 des Abscheideelements 100 an einer Anschlusseinrichtung 400 zentral, insbesondere koaxial, angeordnet ist, und ein dem ersten Gasdurchlass 32 zugeordnetes Gehäusedeckelgewinde 36 auf, welches bei bestimmungsgemäßer Montage zum Aufschrauben auf ein Verbindungselementgewinde 232 eines Verbindungselements 200 der Abscheidevorrichtung 300 ausgebildet ist.

Weiter weist der Gehäusedeckel 30 mindestens einen zweiten Gasdurchlass 34 auf, der in Bezug zur bestimmungsgemäßen Montageachse 40 des Abscheideelements 100 radial außerhalb des ersten Gasdurchlasses 32 angeordnet ist.

Das Filterelement 10 weist eine sich in Bezug zur bestimmungsgemäßen Montageachse 40 des Abscheideelements 100 radial erstreckende und dem Gehäusedeckel 30 zugewandte Stirnseite auf, welche durch eine erste Endscheibe 50 begrenzt ist. Dabei weist die Endscheibe 50 eine zum Durchführen des Verbindungselements 200 ausgebildete und dem ersten Gasdurchlass 32 zugeordnete Durchstrecköffnung 60 auf.

Das Abscheideelement 100 weist wenigstens ein Konturelement 102 auf, welches zur Aufnahme eines an dem Verbindungselement 200 der Abscheidevorrichtung 300 angeordneten Gegenkonturelements 212 bei bestimmungsgemäßem Verschrauben des Abscheideelements 100 mit dem Verbindungselement 200 ausgebildet ist. Insbesondere kann das Abscheideelement 100 eine Kontur 104 am Konturelement 102 aufweisen, die verwechslungssicher mit dem Gegenkonturelement 212 zusammensetzbar ist (siehe Figur 5).

Das Gegenkonturelement 212 kann bei bestimmungsgemäßer Montage des Abscheideelements 100 auf das Verbindungselement 200 durch das Konturelement 102 wenigstens bereichsweise durchgreifen.

In einem bevorzugten Ausführungsbeispiel kann die Durchstrecköffnung 60 vorteilhaft von einem in Bezug zur bestimmungsgemäßen Montageachse 40 des Abscheideelements 100 radial inneren Randbereich 62 der ersten Endscheibe 50 begrenzt sein. Das Konturelement 102 kann dabei als radial innerer, insbesondere kreisförmiger, Randbereich 62 der Durchstrecköffnung 60 ausgebildet sein. Das Umfangselement 204 des Verbindungselements 200 kann das Gegenkonturelement 212 aufweisen. Dabei kann ein Außendurchmesser des Gegenkonturelements 212 kleiner als ein Innendurchmesser des Konturelements 102 sein.

In einer alternativen Ausführungsform kann das Konturelement 102 wenigstens eine Kontur 104, insbesondere Aussparungen 106 Einschnitte und/oder Löcher, aufweisen, welche bei bestimmungsgemäßer Montage mit einer an dem Gegenkonturelement 212 angeordneten Gegenkontur 214 zusammenwirkt, insbesondere ineinander eingreift.

Vorteilhaft ist wenigstens eines von Konturelement 102 und Gegenkonturelement 212 um die Montageachse 40 drehbar gelagert, damit Konturelement 102 und Gegenkonturelement 212 ineinandergreifen können, wenn das Abscheideelement 100 auf das Verbindungselement 200 aufgeschraubt wird.

Weiter kann mindestens eine Aufnahme 68 für ein Dichtungs- und Dämpfungselement 80 vorgesehen sein, das zwischen dem Filterelement 10, insbesondere zwischen der ersten Endscheibe 50, und einer an einem Innenraum 24 des Gehäuses 90 zugewandten Innenseite 38 des Gehäusedeckels 30 ausgebildeten Dichtfläche 42 dichtend verpresst ist.

Das Dichtungs- und Dämpfungselement 80 ist dazu ausgebildet, eine Reinseite 112 des Abscheideelements 100 von einer ungereinigtes Gas aufweisenden Rohseite 110 des Gehäuses 90 abzudichten sowie in Bezug zur bestimmungsgemäßen Montageachse 40 des Abscheideelements 100 axial gerichtete Schwingungen des Filterelements 10 abzudämpfen.

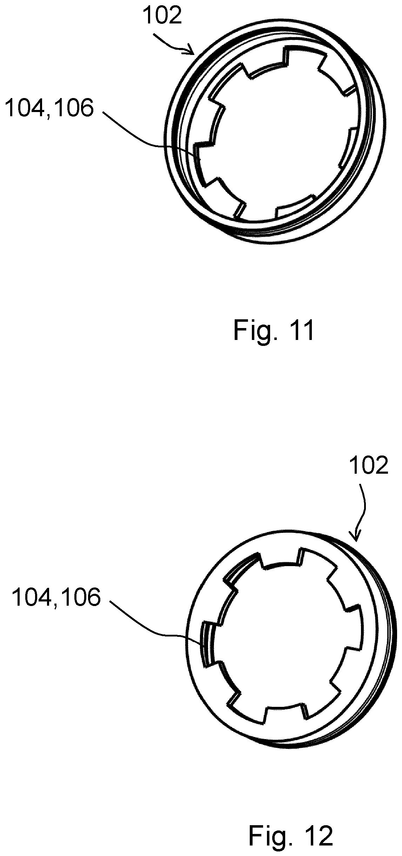

Die Figuren 11 und 12 zeigen eine Ausführung eines Konturelements 102 in axial entgegengesetzten Perspektiven mit der Kontur 104 in Ausgestaltung einer Vielzahl von Aussparungen 106. Das Konturelement 102 am Abscheideelement 100 wirkt zusammen mit einem dazu komplementären Gegenkonturelement 212 am Verbindungselement 200 (vgl. Fig. 4), welches bei bestimmungsgemäßem Verschrauben des Abscheideelements 100 mit dem Verbindungselement 200 zum verwechslungssicheren Zusammenwirken ausgebildet sind.

## Patentansprüche

1. Abscheidevorrichtung (300) zur Abtrennung wenigstens eines flüssigen Fluids aus Gas, umfassend
mindestens ein Abscheideelement (100) mit einem Gehäuse (90) mit Gehäusedeckel (30) und einem darin angeordneten Filterelement (10), wobei der Gehäusedeckel (30) ein Gehäusedeckelgewinde (36) aufweist, das zum Aufschrauben auf ein Verbindungselementgewinde (232) ausgebildet ist,
mindestens einen ersten Gasdurchlass (32), der in Bezug zu einer Montageachse (40) des Abscheideelements (100) an einer Anschlusseinrichtung (400) zentral, insbesondere koaxial, angeordnet ist und dem das Gehäusedeckelgewinde (36) zugeordnet ist,
mindestens einen zweiten Gasdurchlass (34), der in Bezug zur Montageachse (40) des Abscheideelements (100) radial außerhalb des ersten Gasdurchlasses (32) angeordnet ist,
mindestens ein zur Verbindung des Abscheideelements (100) der Abscheidevorrichtung (300) mit einer Anschlusseinrichtung (400) ausgebildetes Verbindungselement (200), das das Verbindungselementgewinde (232) sowie ein Leitungselement (202) aufweist, wobei an das Verbindungselementgewinde (232) ein Umfangselement (204) anschließt, das sich in axialer Richtung (280) in einen Innenraum (24) des Abscheideelements (100) erstreckt, wobei das Verbindungselementgewinde (232) sowie das Umfangselement (204) das Leitungselement (202) umgeben und wobei zwischen Leitungselement (202) und Umfangselement (204) wenigstens ein in einer axialen Richtung (280) verlaufender Fluidkanal (220) ausgebildet ist,
wobei das Abscheideelement (100) wenigstens ein Konturelement (102) und das Verbindungselement (200) wenigstens ein dazu komplementäres Gegenkonturelement (212) aufweisen, welche bei bestimmungsgemäßem Verschrauben des Abscheideelements (100) mit dem Verbindungselement (200) zum verwechslungssicheren Zusammenwirken ausgebildet sind,
**dadurch gekennzeichnet, dass**
das Umfangselement (204) das Gegenkonturelement (212) aufweist mit einem oder mehreren Durchbrüchen (206), welche das Umfangselement (204) in radialer Richtung von seiner Außenseite (274) bis zu dem Fluidkanal (220) durchdringen.

2. Abscheidevorrichtung nach Anspruch 1, wobei das Konturelement (102) als radial innerer, insbesondere kreisförmiger Randbereich (62) einer Durchstrecköffnung (60) in einer ersten Endscheibe (50) des Filterelements (10) ausgebildet ist, wobei das Gegenkonturelement (212) bei bestimmungsgemäßer Montage des Abscheideelements (100) auf das Verbindungselement (200) durch das Konturelement (102) durchgreift, wobei insbesondere ein Außendurchmesser des Gegenkonturelements (212) kleiner als ein Innendurchmesser des Konturelements (102) ist.

3. Abscheidevorrichtung nach Anspruch 1 oder 2, wobei das Konturelement (102) wenigstens eine Kontur (104), insbesondere Aussparungen (106), Einschnitte und/oder Löcher, aufweist, welche bei bestimmungsgemäßer Montage mit wenigstens einer an dem Gegenkonturelement (212) angeordneten Gegenkontur (214) zusammenwirkt, insbesondere ineinander eingreift.

4. Abscheidevorrichtung nach Anspruch 3, wobei die Durchbrüche (206) in Umfangsrichtung des Verbindungselements (200) innerhalb der Gegenkontur (214) angeordnet sind.

5. Abscheidevorrichtung nach einem der Ansprüche 1 bis 4, wobei wenigstens eines von Konturelement (102) und Gegenkonturelement (212) um die Montageachse (40) drehbar gelagert ist.

6. Abscheidevorrichtung nach einem der vorhergehenden Ansprüche, wobei mindestens ein Dichtungs- und Dämpfungselement (80) zur Abdichtung einer Reinseite (112) des Abscheideelements (100) von einer ungereinigtes Gas aufweisenden Rohseite (110) des Gehäuses (90) und zum Abdämpfen in Bezug zur Montageachse (40) des Abscheideelements (100) axial gerichteter Schwingungen des Filterelements (10) zwischen dem Filterelement (10) und einer an der dem Innenraum des Gehäuses (90) zugewandten Innenseite (38) des Gehäusedeckels (30) ausgebildeten Dichtfläche (42) dichtend verpresst ist.

7. Abscheidevorrichtung nach einem der vorhergehenden Ansprüche, wobei das Verbindungselement (200) und die erste Endscheibe (50), insbesondere das Verbindungselement (200) und die Durchstrecköffnung (60), insbesondere das Verbindungselement (200) und der Randbereich (62) in Gebrauchsstellung der Abscheidevorrichtung (300) derart kontaktlos sind, dass Gehäusedeckelgewinde (36) und Innenraum des Filterelements (10) gedrosselt fluidverbunden sind.

8. Abscheideelement (100) für eine Abscheidevorrichtung (300) nach einem der vorhergehenden Ansprüche, mit einem Gehäuse (90) und mindestens einem darin angeordnetem Filterelement (10) und mit einem zum Verschließen einer Stirnseite des Gehäuses (90) ausgebildeten Gehäusedeckel (30) mit
mindestens einem ersten Gasdurchlass (32), der in Bezug zu einer bestimmungsgemäßen Montageachse (40) des Abscheideelements (100) an einer Anschlusseinrichtung (400) zentral, insbesondere koaxial, angeordnet ist,
einem dem ersten Gasdurchlass (32) zugeordneten Gehäusedeckelgewinde (36), welches bei bestimmungsgemäßer Montage zum Aufschrauben auf ein Verbindungselementgewinde (232) eines Verbindungselements (200) der Abscheidevorrichtung (300) ausgebildet ist und
mindestens einem zweiten Gasdurchlass (34), der in Bezug zur bestimmungsgemäßen Montageachse (40) des Abscheideelements (100) radial außerhalb des ersten Gasdurchlasses (32) angeordnet ist,
wobei das Filterelement (10) eine sich in Bezug zur bestimmungsgemäßen Montageachse (40) des Abscheideelements (100) radial erstreckende und dem Gehäusedeckel (30) zugewandte Stirnseite aufweist, welche durch eine erste Endscheibe (50) begrenzt ist,
wobei die Endscheibe (50) eine zum Durchführen des Verbindungselements (200) ausgebildete und dem ersten Gasdurchlass (32) zugeordnete Durchstrecköffnung (60) aufweist,
wobei das Abscheideelement (100) wenigstens ein Konturelement (102) aufweist, welches bei bestimmungsgemäßem Verschrauben des Abscheideelements (100) mit dem Verbindungselement (200) zur Aufnahme eines an dem Verbindungselement (200) der Abscheidevorrichtung (300) angeordneten Gegenkonturelements (212) ausgebildet ist und das Konturelement (102) als wenigstens eine Kontur (104) Aussparungen (106), Einschnitte und/oder Löcher zum verwechslungssicheren Zusammensetzen mit dem Gegenkonturelement (212) aufweist.

9. Abscheideelement nach Anspruch 8, wobei die Durchstrecköffnung (60) von einem in Bezug zur bestimmungsgemäßen Montageachse (40) des Abscheideelements (100) radial inneren Randbereich (62) der ersten Endscheibe (50) begrenzt ist,
wobei das Konturelement (102) als radial innerer, insbesondere kreisförmiger, Randbereich (62) der Durchstrecköffnung (60) ausgebildet ist.

10. Abscheideelement nach einem der Ansprüche 8 oder 9, wobei das Konturelement (102) um die Montageachse (40) drehbar gelagert ist.

11. Abscheideelement nach einem der Ansprüche 8 bis 10, wobei mindestens eine Aufnahme (68) für ein Dichtungs- und Dämpfungselement (80) vorgesehen ist, das zwischen dem Filterelement (10), insbesondere zwischen der ersten Endscheibe (50), und einer an einem Innenraum (24) des Gehäuses (90) zugewandten Innenseite (38) des Gehäusedeckels (30) ausgebildeten Dichtfläche (42) dichtend verpresst ist, wobei das Dichtungs- und Dämpfungselement (80) dazu ausgebildet ist, eine Reinseite (112) des Abscheideelements (100) von einer ungereinigtes Gas aufweisenden Rohseite (110) des Gehäuses (90) abzudichten und in Bezug zur bestimmungsgemäßen Montageachse (40) des Abscheideelements (100) axial gerichtete Schwingungen des Filterelements (10) abzudämpfen.

## Claims

1. A separating device (300) for separating at least one liquid fluid from gas, comprising
at least one separating element (100) having a housing (90) with a housing cover (30) and a filter element (10) disposed therein, wherein the housing cover (30) features a housing cover thread (36) designed to be screwed onto a connecting element thread (232),
at least one first gas passage (32) disposed centrally, in particular coaxially, with respect to an assembly axis (40) of the separating element (100) at a connecting means (400) and to which the housing cover thread (36) is allocated,
at least one second gas passage (34), which is disposed radially outside the first gas passage (32) with respect to the assembly axis (40) of the separating element (100),
at least one connecting element (200) designed for connecting the separating element (100) of the separating device (300) to a connecting means (400), said connecting element featuring the connecting element thread (232) and a conduit element (202), wherein a circumferential element (204) adjoins the connecting element thread (232) and extends in the axial direction (280) into an interior space (24) of the separating element (100), wherein the connecting element thread (232) and the circumferential element (204) surround the conduit element (202), and wherein at least one fluid channel (220) extending in an axial direction (280) is designed between the conduit element (202) and the circumferential element (204),
wherein the separating element (100) features at least one contour element (102) and the connecting element (200) features at least one complementary counter contour element (212), which, during the intended screwing of the separating element (100) to the connecting element (200), are designed for confusion-proof interaction,
**characterized in that**
the circumferential element (204) features the counter contour element (212) with one or a plurality of openings (206), which penetrate the circumferential element (204) in the radial direction from its exterior side (274) to the fluid channel (220).

2. The separating device according to claim 1, wherein the contour element (102) is designed as a radially inner, in particular circular peripheral area (62) of a through-opening (60) in a first end disc (50) of the filter element (10), wherein the counter contour element (212) engages through the contour element (102) during the intended assembly of the separating element (100) onto the connecting element (200), wherein in particular an outer diameter of the counter contour element (212) is smaller than an inner diameter of the contour element (102).

3. The separating device according to claim 1 or 2, wherein the contour element (102) features at least one contour (104), in particular recesses (106), indentations and/or holes, which, during the intended assembly, interacts with at least one counter contour (214) disposed on the counter contour element (212), in particular by engaging in one another.

4. The separating device according to claim 3, wherein the openings (206) are disposed in the circumferential direction of the connecting element (200) inside the counter contour (214).

5. The separating device according to one of the claims 1 to 4, wherein at least one of the contour element (102) and the counter contour element (212) is rotatably mounted around the mounting axis (40).

6. The separating device according to one of the preceding claims, wherein at least one sealing and damping element (80) for sealing a clean side (112) of the separating element (100) from a raw side (110) of the housing (90) containing unfiltered gas and for damping axially directed oscillations of the filter element (10) with respect to the assembly axis (40) of the separating element (100) is sealingly compressed between the filter element (10) and sealing surface (42) designed at an interior side (38) of the housing cover (30) facing the interior space of the housing (90).

7. The separating device according to one of the preceding claims, wherein the connecting element (200) and the first end disc (50), in particular the connecting element (200) and the through-opening (60), in particular the connecting element (200) and the peripheral area (62) are contactless in the position of use of the separating device (300) in such a way that the housing cover thread (36) and the interior area of the filter element (10) are fluidly connected in a throttled manner.

8. A separating element (100) for a separating device (300) according to one of the preceding claims, having a housing (90) and at least one filter element (10) disposed therein and having a housing cover (30) designed for closing a front face of the housing (90) with
at least one first gas passage (32) disposed centrally, in particular coaxially, with respect to an intended assembly axis (40) of the separating element (100) at a connecting means (400),
a housing cover thread (36) associated with the first gas passage (32), said housing cover thread being designed during the intended assembly to be screwed to a connecting element thread (232) of a connecting element (200) of the separating device (300), and
at least one second gas passage (34) disposed radially outside the first gas passage (32) with respect to the intended assembly axis (40) of the separating element (100),
wherein the filter element (10) features a front face extending radially with respect to the intended assembly axis (40) of the separating element (100) and facing the housing cover (30), said front face being limited by a first end disc (50),
wherein the end disc (50) features a through-opening (60) designed for feeding through the connecting element (200) and allocated to the first gas passage (32),
wherein the separating element (100) features at least one contour element (102) which, during the intended screwing of the separating element (100) to the connecting element (200), is designed to accommodate a counter contour element (212) disposed on the connecting element (200) of the separating device (300), and the contour element (102) features at least one contour (104) of recesses (106), indentations and/or holes for a confusion-proof assembly with the counter contour element (212).

9. The separating element according to claim 8, wherein the through-opening (60) is limited by a radially inner peripheral area (62) of the first end disc (50) with respect to the intended assembly axis (40) of the separating element (100),
wherein the contour element (102) is designed as a radially inner, in particular circular, peripheral area (62) of the through-opening (60).

10. The separating element according to one of the claims 8 or 9, wherein the contour element (102) is mounted rotatably around the mounting axis (40).

11. The separating element according to one of the claims 8 to 10, wherein at least one accommodating means (68) is provided for a sealing and damping element (80) sealingly compressed between the filter element (10), in particular between the first end disc (50), and a sealing surface (42) formed on an interior side (38) of the housing cover (30) facing an interior space (24) of the housing (90) wherein the sealing and damping element (80) is designed to seal a clean side (112) of the separating element (100) from a raw side (110) of the housing (90) featuring untreated gas and to damp vibrations of the filter element (10) oriented in the axial direction with respect to the intended mounting axis (40) of the separating element (100).

## Revendications

1. Dispositif de séparation (300) pour séparer au moins un fluide liquide d'un gaz, comprenant
au moins un élément de séparation (100) ayant un boîtier (90) avec un couvercle de boîtier (30) et un élément filtrant (10) disposé dans celui-ci, le couvercle de boîtier (30) présentant un filet de couvercle de boîtier (36) réalisé pour être vissé sur un filet d'élément de raccordement (232),
au moins un premier passage de gaz (32) disposé de manière centrale, notamment coaxiale, par rapport à un axe de montage (40) de l'élément de séparation (100) sur un dispositif de raccordement (400) et auquel est attribué le filet de couvercle de boîtier (36),
au moins un deuxième passage de gaz (34) disposé radialement à l'extérieur du premier passage de gaz (32) par rapport à l'axe de montage (40) de l'élément de séparation (100),
au moins un élément de raccordement (200) réalisé pour raccorder l'élément de séparation (100) du dispositif de séparation (300) à un dispositif de raccordement (400), lequel élément de raccordement présentant le filet d'élément de raccordement (232) ainsi qu'un élément de conduite (202), un élément périphérique (204) étant relié au filet d'élément de raccordement (232) et s'étendant dans le sens axial (280) dans un espace intérieur (24) de l'élément de séparation (100), le filet d'élément de raccordement (232) et l'élément périphérique (204) entourent l'élément de conduit (202), et au moins un canal de fluide (220) s'étendant dans un sens axial (280) étant réalisé entre l'élément de conduite (202) et l'élément périphérique (204),
l'élément de séparation (100) présentant au moins un élément de contour (102) et l'élément de raccordement (200) au moins un élément de contre-contour (212) complémentaire à celui-ci, lesquels sont réalisés pour coopérer sans risque de confusion lorsque l'élément de séparation (100) est vissé à l'élément de raccordement (200) conformément à son utilisation,
**caractérisé en ce que**
l'élément périphérique (204) présente l'élément de contre-contour (212) avec une ou plusieurs passages (206) qui pénètrent l'élément périphérique (204) dans un sens radial depuis sa face extérieure (274) jusqu'au canal de fluide (220).

2. Dispositif de séparation selon la revendication 1, l'élément de contour (102) étant réalisé en tant que zone périphérique (62) radialement intérieure, notamment circulaire, d'une ouverture de pénétration (60) dans un premier disque d'extrémité (50) de l'élément filtrant (10), l'élément de contre-contour (212) traversant l'élément de contour (102) lors du montage conformément à son utilisation de l'élément de séparation (100) sur l'élément de raccordement (200), notamment un diamètre extérieur de l'élément de contre-contour (212) étant inférieur à un diamètre intérieur de l'élément de contour (102).

3. Dispositif de séparation selon la revendication 1 ou 2, l'élément de contour (102) présentant au moins un contour (104), notamment des évidements (106), des entailles et/ou des trous, qui, lors d'un montage conformément à son utilisation, coopère avec au moins un contre-contour (214) disposé sur l'élément de contre-contour (212), notamment vient en prise l'un dans l'autre.

4. Dispositif de séparation selon la revendication 3, les passages (206) étant disposés en sens circonférentiel de l'élément de raccordement (200), à l'intérieur du contre-contour (214).

5. Dispositif de séparation selon l'une quelconque des revendications 1 à 4, au moins un élément parmi l'élément de contour (102) et l'élément de contre-contour (212) étant logé de manière à pouvoir tourner autour de l'axe de montage (40).

6. Dispositif de séparation selon l'une quelconque des revendications précédentes, au moins un élément d'étanchéité et d'amortissement (80) pour étancher un côté pur (112) de l'élément de séparation (100) d'un côté brut (110) du boîtier (90) contenant un gaz non purifié et pour atténuer des oscillations de l'élément filtrant (10) orientées en sens axial par rapport à l'axe de montage (40) de l'élément de séparation (100) est comprimé de manière étanche entre l'élément filtrant (10) et une surface d'étanchéité (42) réalisée sur la face intérieure (38) du couvercle de boîtier (30) orientée vers l'espace intérieur du boîtier (90).

7. Dispositif de séparation selon l'une quelconque des revendications précédentes, l'élément de raccordement (200) et le premier disque d'extrémité (50), notamment l'élément de raccordement (200) et l'ouverture de pénétration (60), notamment l'élément de raccordement (200) et la zone périphérique (62) sont sans contact en position d'utilisation du dispositif de séparation (300) de telle manière que le filet de couvercle de boîtier (36) et l'espace intérieur de l'élément filtrant (10) sont connectés fluidiquement par étranglement.

8. Élément de séparation (100) pour un dispositif de séparation (300) selon l'une quelconque des revendications précédentes, ayant un boîtier (90) et au moins un élément filtrant (10) disposé dans ce dernier et ayant un couvercle de boîtier (30) conçu pour fermer une face frontale du boîtier (90) avec
au moins un premier passage de gaz (32) disposé de manière centrale, notamment coaxiale, par rapport à un axe de montage (40), conformément à son utilisation, de l'élément de séparation (100) sur un dispositif de raccordement (400),
un filet de couvercle de boîtier (36) attribué au premier passage de gaz (32) et qui est réalisé, lors d'un montage conformément à son utilisation, pour être vissé sur un filet d'élément de raccordement (232) d'un élément de raccordement (200) du dispositif de séparation (300) et
au moins un deuxième passage de gaz (34) disposé radialement à l'extérieur du premier passage de gaz (32) par rapport à l'axe de montage (40), conformément à son utilisation, de l'élément de séparation (100),
l'élément filtrant (10) présentant une face frontale s'étendant radialement par rapport à l'axe de montage (40), conformément à son utilisation, de l'élément de séparation (100) et faisant face au couvercle de boîtier (30), laquelle face frontale étant limitée par un premier disque d'extrémité (50),
le disque d'extrémité (50) présentant une ouverture de pénétration (60) réalisée pour le passage de l'élément de raccordement (200) et attribuée au premier passage de gaz (32),
l'élément de séparation (100) présentant au moins un élément de contour (102), qui, lorsque l'élément de séparation (100) est vissé conformément à son utilisation à l'élément de raccordement (200), est réalisé pour recevoir un élément de contre-contour (212) disposé sur l'élément de raccordement (200) du dispositif de séparation (300) et l'élément de contour (102) présentant en tant qu'au moins un contour (104) des évidements (106), des entailles et/ou des trous pour l'assemblage avec l'élément de contre-contour (212) sans risque de confusion.

9. Élément de séparation selon la revendication 8, l'ouverture de pénétration (60) étant délimitée par une zone périphérique (62) radialement intérieure du premier disque d'extrémité (50) par rapport à l'axe de montage (40) de l'élément de séparation (100) conformément à son utilisation,
l'élément de contour (102) étant réalisé en tant que zone périphérique (62) radialement intérieure, notamment circulaire, de l'ouverture de pénétration (60).

10. Élément de séparation selon l'une quelconque des revendications 8 ou 9, l'élément de contour (102) étant logé de manière à pouvoir tourner autour de l'axe de montage (40).

11. Élément de séparation selon l'une quelconque des revendications 8 à 10, au moins un logement (68) étant prévu pour un élément d'étanchéité et d'amortissement (80) pressé de manière étanche entre l'élément filtrant (10), notamment entre le premier disque d'extrémité (50), et une surface d'étanchéité (42) réalisée sur la face intérieure (38) du couvercle (30) du boîtier, tournée vers un espace intérieur (24) du boîtier (90), l'élément d'étanchéité et d'amortissement (80) étant réalisé pour étancher un côté pur (112) de l'élément de séparation (100) par rapport à un côté brut (110) du boîtier (90) présentant un gaz non purifié et pour amortir des vibrations de l'élément filtrant (10) dirigées axialement par rapport à l'axe de montage (40) conforme de l'élément de séparation (100).
